(19) **Europäisches Patentamt European Patent Office Office européen des brevets**

(11) **EP 4 505 453 B1**

(12) **EUROPEAN PATENT SPECIFICATION**

(45) Date of publication and mention
of the grant of the patent:
**08.07.2026 Bulletin 2026/28**

(21) Application number: **23722093.4**

(22) Date of filing: **31.03.2023**

(51) International Patent Classification (IPC):
**G10L 21/0308** (2013.01)    **G06F 16/632** (2019.01)
**G06N 3/045** (2023.01)    **G06N 3/08** (2023.01)
**G10L 21/0272** (2013.01)    **G10L 25/30** (2013.01)
**G06N 3/02** (2006.01)

(52) Cooperative Patent Classification (CPC):
**G10L 21/0272; G06F 16/632; G06N 3/045;**
**G06N 3/08; G10L 21/0308;** G06N 3/02;
G10L 25/30; G10L 2021/02087

(86) International application number:
**PCT/JP2023/014469**

(87) International publication number:
**WO 2023/195541 (12.10.2023 Gazette 2023/41)**

(54) **METHOD AND SYSTEM FOR TARGET SOURCE SEPARATION**

VERFAHREN UND SYSTEM ZUR ZIELQUELLENTRENNUNG

PROCÉDÉ ET SYSTÈME DE SÉPARATION DE SOURCE CIBLE

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **06.04.2022 US 202263362587 P**
**09.10.2022 US 202218045164**

(43) Date of publication of application:
**12.02.2025 Bulletin 2025/07**

(73) Proprietor: **Mitsubishi Electric Corporation**
**Tokyo 100-8310 (JP)**

(72) Inventors:
• **WICHERN, Gordon**
**Cambridge, Massachusetts 02139-1955 (US)**
• **TZINIS, Efthymios**
**Cambridge, Massachusetts 02139-1955 (US)**
• **SUBRAMANIAN, Aswin Shanmugam**
**Cambridge, Massachusetts 02139-1955 (US)**
• **LE ROUX, Jonathan**
**Cambridge, Massachusetts 02139-1955 (US)**

(74) Representative: **Pfenning, Meinig & Partner mbB**
**Patent- und Rechtsanwälte**
**Joachimsthaler Straße 10-12**
**10719 Berlin (DE)**

(56) References cited:
• **OCHIAI TSUBASA ET AL: "Listen to What You**
**Want: Neural Network-Based Universal Sound**
**Selector", INTERSPEECH 2020, 1 January 2020**
**(2020-01-01), pages 1441 - 1445, XP093309949,**
**Retrieved from the Internet <URL:https://arxiv.**
**org/pdf/2006.05712> DOI: 10.21437/**
**Interspeech.2020-2210**
• **EFTHYMIOS TZINIS ET AL: "Heterogeneous**
**Target Speech Separation", ARXIV.ORG,**
**CORNELL UNIVERSITY LIBRARY, 201 OLIN**
**LIBRARY CORNELL UNIVERSITY ITHACA, NY**
**14853, 7 April 2022 (2022-04-07), XP091201116**
• **XUBO LIU ET AL: "Separate What You Describe:**
**Language-Queried Audio Source Separation",**
**ARXIV.ORG, CORNELL UNIVERSITY LIBRARY,**
**201 OLIN LIBRARY CORNELL UNIVERSITY**
**ITHACA, NY 14853, 28 March 2022 (2022-03-28),**
**XP091185865**

## Description

[Technical Field]

This disclosure generally relates to target sound source separation, and more specifically to a sound processing system for extracting the target sound from a mixture of sound signals.

[Background Art]

Traditional source separation systems for extracting a target sound signal are typically intended to isolate only a particular type of sound, such as for speech enhancement or instrument de-mixing, where the target was determined by the training scheme and may not be changed at test time. Traditional source separation approaches, typically separate an audio mixture only into sources of a fixed type (for example, isolate vocals from background music), or else they separate all sources in the mixture (e.g., isolate each speaker in a meeting room) without any differentiating factor, and then use post-processing to find a target signal. Recently, conditioning-based approaches have emerged as a promising alternative, where an auxiliary input such as a class-label can be used to indicate the desired source, but the set of available conditions is typically mutually exclusive and lacks flexibility.

For example, in the cocktail party problem, humans have the uncanny ability to focus on a sound source of interest within a complex acoustic scene and may change the target of their focus depending on the situation, relying on attention mechanisms that modulate the cortical responses to auditory stimuli. While the field of sound source separation has made great strides towards reproducing such abilities in machines, particularly with the advent of deep learning approaches, there is still a gap in terms of the flexibility with which the target source can be determined. As already discussed, early works developed "specialist" models intended to isolate only a particular type of sound. Later works such as deep clustering and permutation invariant training (PIT) focused on separating all sources in a mixture without any differentiating factor. However, this still leaves the problem of determining which of the extracted sources is the source of interest unsolved.

Document Xubo Liu et al. ("Separate What You Describe: Language-Queried Audio Source Separation, arxiv.org, Cornell University Library, 201 Olin Library Cornell University Ithaca, NY 14853, 2022-03-28, XP091185865, doi:10.48550/arXiv.2203.15147) discloses a task of language-queried audio source separation, which aims to separate a target source from an audio mixture based on a natural language query of the target source. The document proposes an end-to-end neural network that is learned to jointly process acoustic and linguistic information, and separate the target source that is consistent with the language query from an audio mixture.

Document Ochiai Tsubasa et al. ("Listen to What You Want: Neural Network-Based Universal Sound Selector", Proc. Interspeech 2020, 1441-1445, doi: 10.21437/Interspeech.2020-2210, XP093309949) discloses a sound selection neural network that enables to directly select acoustic event sounds from a mixture given user-specified target acoustic event classes. The proposed framework can be explicitly optimized to simultaneously select sounds from multiple desired acoustic event classes, independently of the number of sources in the mixture.

Accordingly, there exists a need for an advanced system that overcomes the above-stated disadvantages. To that end, there is a need for a technical solution to overcome the above-mentioned challenges. More specifically, there is need for such a system that outperforms conventional sound processing systems for extraction of the target sound signals.

[Summary of Invention]

The invention is defined by the independent claims. Certain embodiments are defined in the dependent claims.

The present disclosure provides an enhanced sound processing system for identifying and extracting a target sound signal from a mixture of sounds. More specifically, the present disclosure provides a sound processing and training system that is configured to identify the target sound signal from the mixture of sounds based on mutually inclusive concepts, such as, loudness, gender, language, spatial location, etc.

To that end, some embodiments provide a conditioned model that is configured to mimic human's flexibility when selecting a target sound signal, by focusing on extracting sounds based on semantic concepts and criteria of different nature, i.e., heterogeneous, such as whether a speaker is near or far from the microphone, speaks softly or loudly or speaks in a certain language and the like. The mixture of sound signals is collected from a plurality of sound sources. In addition, a query identifying a target sound signal to be extracted from the mixture of sound signals is collected. The query is associated with the one or more identifiers that are indicative of mutually inclusive characteristics of the target sound signal.

To that end, the mixture of sound signals is collected from the plurality of sound sources with facilitation of one or more microphones, wherein the plurality of sound sources corresponds to at least one of one or more speakers, a person or an individual, industrial equipment, and vehicles.

Further, each identifier present in the query having one or more identifiers belongs to a predetermined set of one or more identifiers and is extracted from the query. Each extracted identifier defines at least one of mutually inclusive and mutually exclusive characteristics of the target sound signal. In addition, one or more logical operators are used to connect the extracted one or more identifiers.

The extracted one or more identifiers and the one or more logical operators are transformed into a digital representation. The digital representation of the one or more identifiers is selected from a set of predetermined digital representations of a plurality of combinations of the one or more identifiers.

To that end, the digital representation corresponds to a conditioning input, which may be represented in any manner, such as by a one hot conditional vector or a multi-hot conditional vector, by a text input, an audio input, and the like, wherein the conditioning input comprises one or more of the mutually inclusive characteristics of the target sound signal.

The invention is based on the execution of a neural network trained to extract the target sound signal from the mixture of sound signals by mixing the digital representation with intermediate outputs of intermediate layers of the neural network. The neural network is trained for each of the set of predetermined digital representations of the plurality of combinations of the one of more identifiers for extracting the target sound signal from the mixture of sound signals. To that end, at training time, the extraction model is configured to generate one or more queries associated with the one or more identifiers from the predetermined set of one or more identifiers.

To that end, in some embodiments, the neural network is based on an architecture comprising one or more intertwined blocks, where each block comprises at least: a feature encoder, a conditioning network, a separation network, and a feature decoder. The conditioning network comprises a feature-invariant linear modulation (FiLM) layer that takes as an input the mixture of sound signals and modulates the input into the conditioning input, wherein the FiLM layer processes the conditioning input and sends the processed conditioning input to the separation network.

Accordingly, one embodiment discloses a method implemented by a computer for extracting a target sound signal. The method includes collecting a mixture of sound signals from a plurality of sound sources. The method further includes selecting a query identifying the target sound signal to be extracted from the mixture of sound signals. The method includes extracting from the query each identifier present in a predetermined set of one or more identifiers. The method includes determining one or more logical operators connecting the extracted one or more identifiers. The method further includes transforming the extracted one or more identifiers and the one or more logical operators into a digital representation predetermined for querying the mixture of sound signals, The method includes executing a neural network trained to extract the target sound signal identified by the digital representation from the mixture of sound signals, by combining the digital representation with intermediate outputs of intermediate layers of the neural network processing the mixture of sound signals. The neural network is trained with machine learning to extract different sound signals identified in a set of predetermined digital representations. Furthermore, the method includes outputting the extracted target sound signal.

Some embodiments provide the sound processing system that is configured to extract the target sound signal from the mixture of sound signals. The sound processing system comprises at least one processor and memory having instructions stored thereon forming executable modules of the sound processing system. The at least one processor is configured to collect a mixture of sound signals. In addition, the at least one processor is configured to collect a query identifying the target sound signal to be extracted from the mixture of sound signals. The query comprises one or more identifiers. The at least one processor is further configured to extract from the query, each identifier of the one or more identifiers, said each identifier being present in a predetermined set of one or more identifiers. Each identifier defines at least one of mutually inclusive and mutually exclusive characteristics of the mixture of sound signals. The at least one processor is configured to determine one or more logical operators connecting the extracted one or more identifiers. Further, the at least one processor is configured to transform the extracted one or more identifiers and the one or more logical operators into a digital representation predetermined for querying the mixture of sound signals. The at least one processor is further configured to execute a neural network trained to extract the target sound signal identified by the digital representation from the mixture of sound signals by combining the digital representation with intermediate outputs of intermediate layers of the neural network. The at least one processor is further configured to output the extracted target sound signal.

Various embodiments disclosed herein provide the sound processing system that can more accurately, efficiently and in a reduced time, extract the target sound signal from the mixture of sound signals. Further, various embodiments provide the sound processing system that is based on the neural network that may be trained to extract the target sound signal based on mutually inclusive and/or mutually exclusive characteristics of the target sound signal. The neural network may be trained using combinations of the mutually inclusive and/or mutually exclusive characteristic datasets, in the form of predetermined set of one or more identifiers, in a manner superior to the existing neural networks.

Further features and advantages will become more readily apparent from the detailed description when taken in conjunction with the accompanying drawings.

[Brief Description of Drawings]

[Fig. 1]

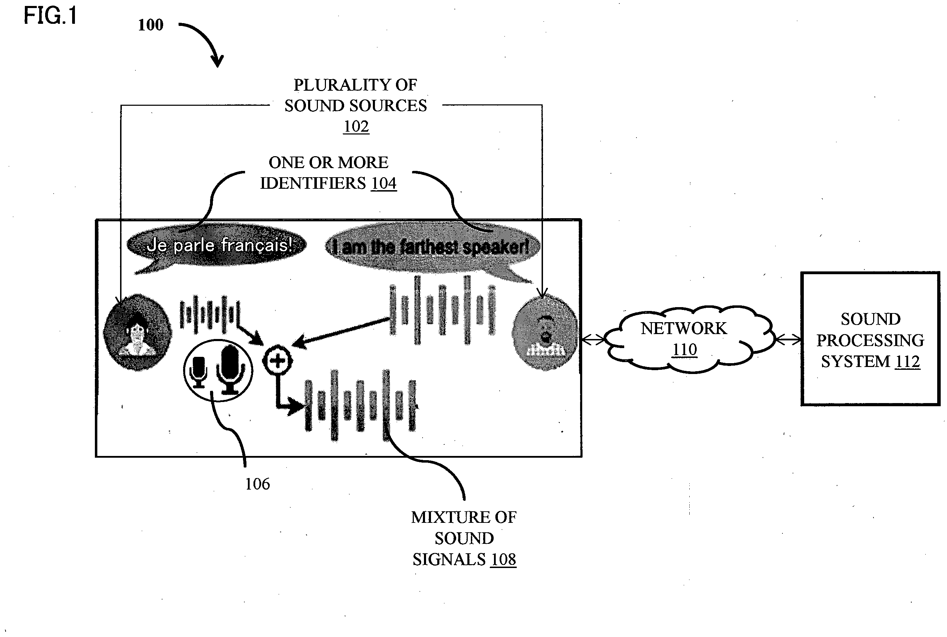

FIG. 1 illustrates a block diagram of an environment for extraction of a target sound signal, according to some embodiments of the present disclosure;
[Fig. 2A]

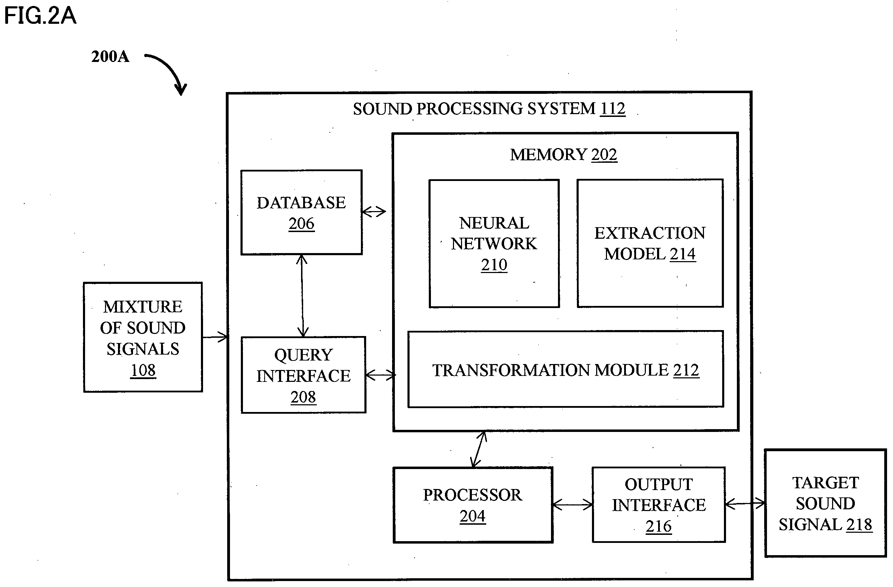

FIG. 2A illustrates a block diagram of a sound processing system extract the target sound signal, according to some embodiments of the present disclosure;
[Fig. 2B]

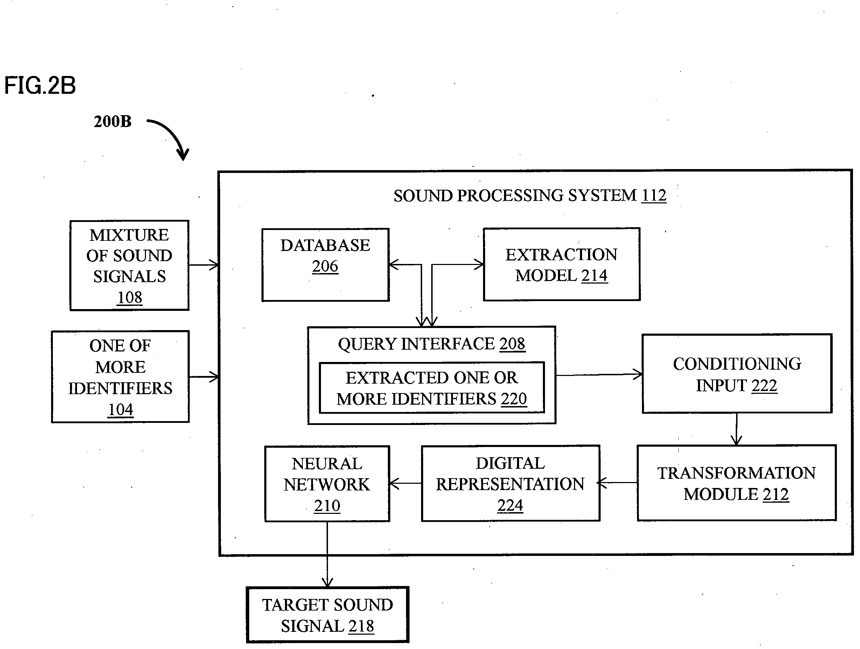

FIG. 2B illustrates a functional block diagram of the sound processing system to extract the target sound signal, according to some embodiments of the present disclosure;
[Fig. 2C]

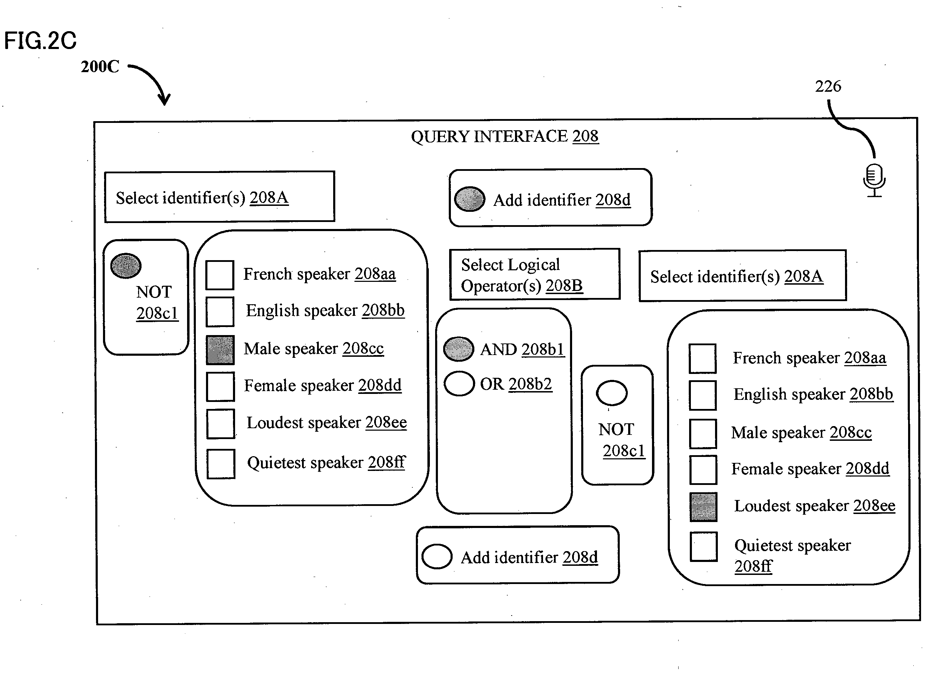

FIG. 2C illustrates a block diagram of a query interface of the sound processing system, according to some embodiments of the present disclosure;
[Fig. 2D]

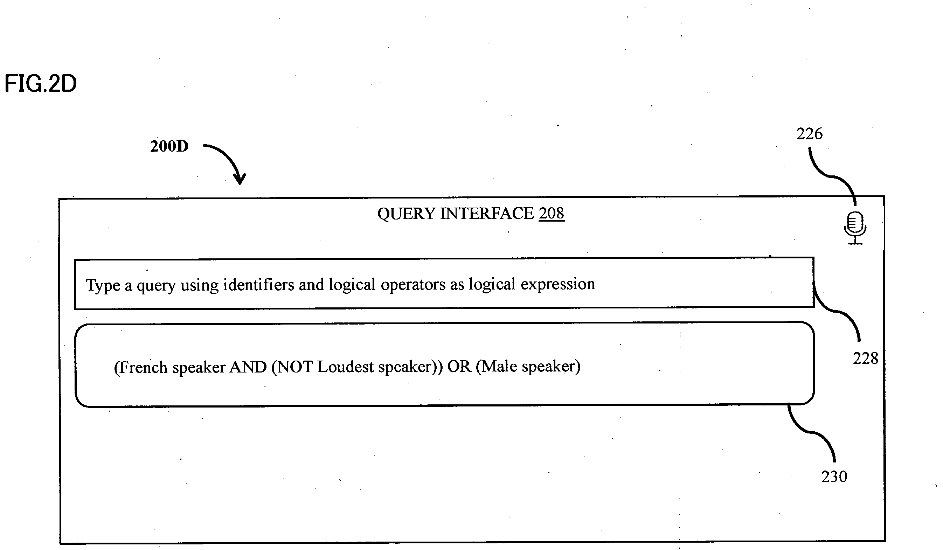

FIG. 2D illustrates an example of the query interface of the sound processing system, according to some embodiments of the present disclosure;
[Fig. 3A]

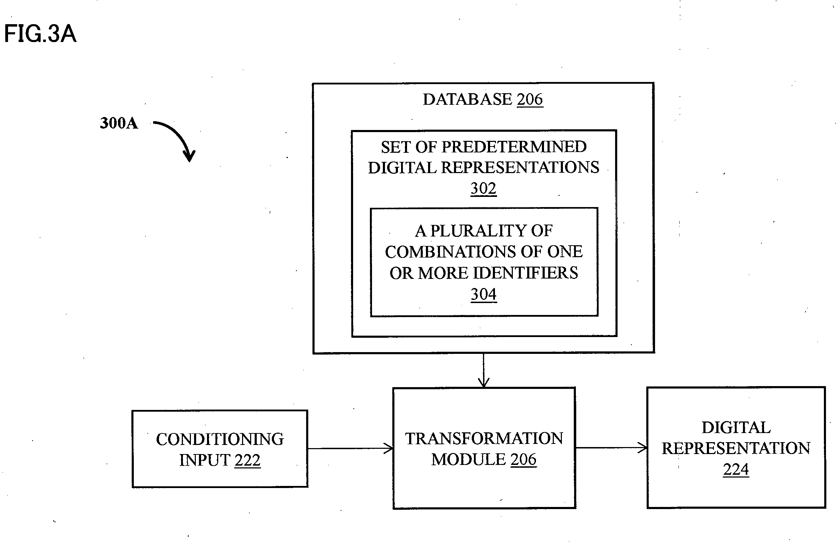

FIG. 3A illustrates a block diagram of a method for generating a digital representation, according to some embodiments of the present disclosure;
[Fig. 3B]

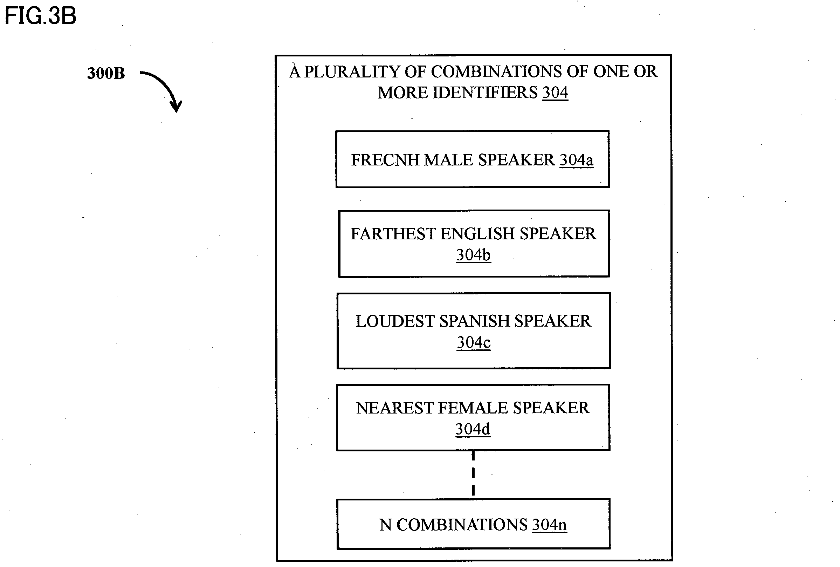

FIG. 3B illustrates a block diagram of a plurality of combinations of one or more identifiers, according to some embodiments of the present disclosure;
[Fig. 3C]

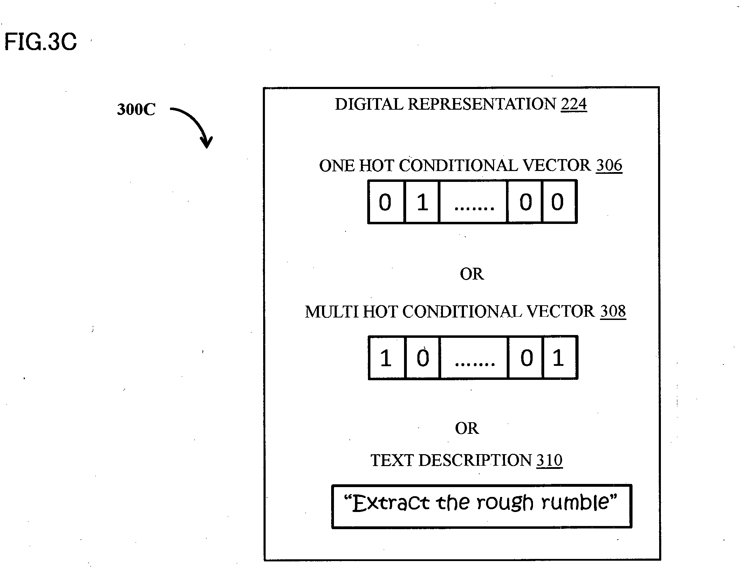

FIG. 3C illustrates a block diagram of different types of the digital representation, according to some embodiments of the present disclosure;
[Fig. 4]

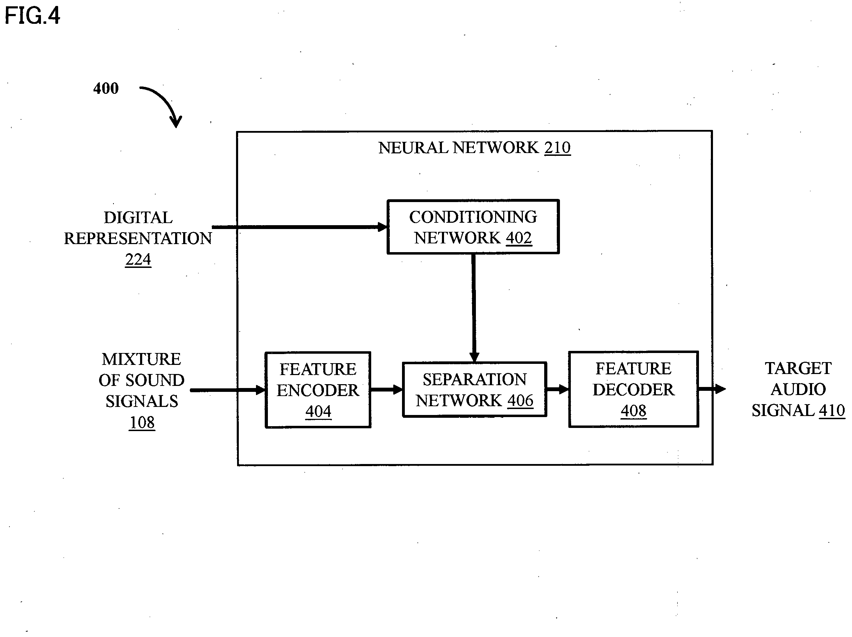

FIG. 4 illustrates a block diagram of a neural network, according to some embodiments of the present disclosure;
[Fig. 5A]

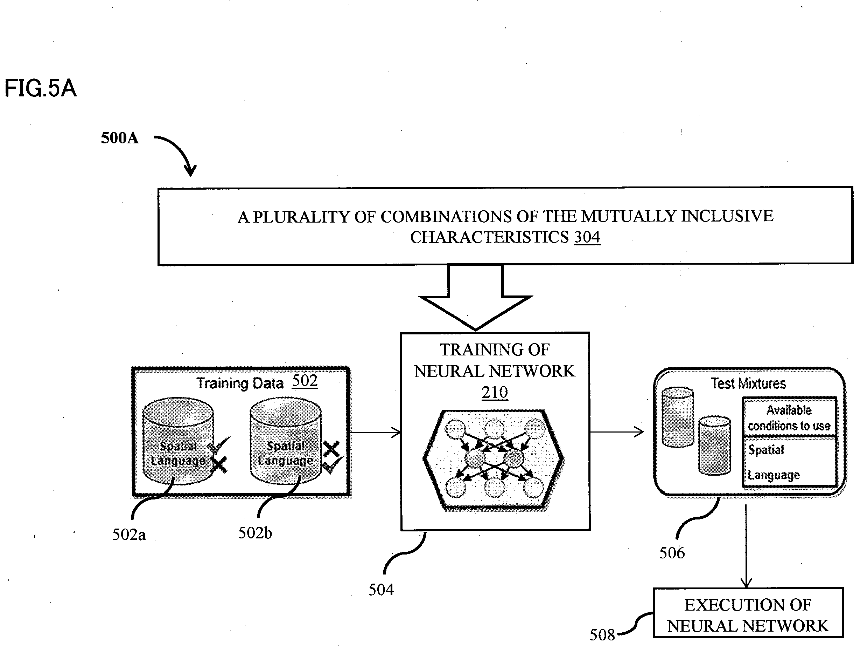

FIG. 5A illustrates a block diagram of training of a neural network, according to some embodiments of the present disclosure;
[Fig. 5B]

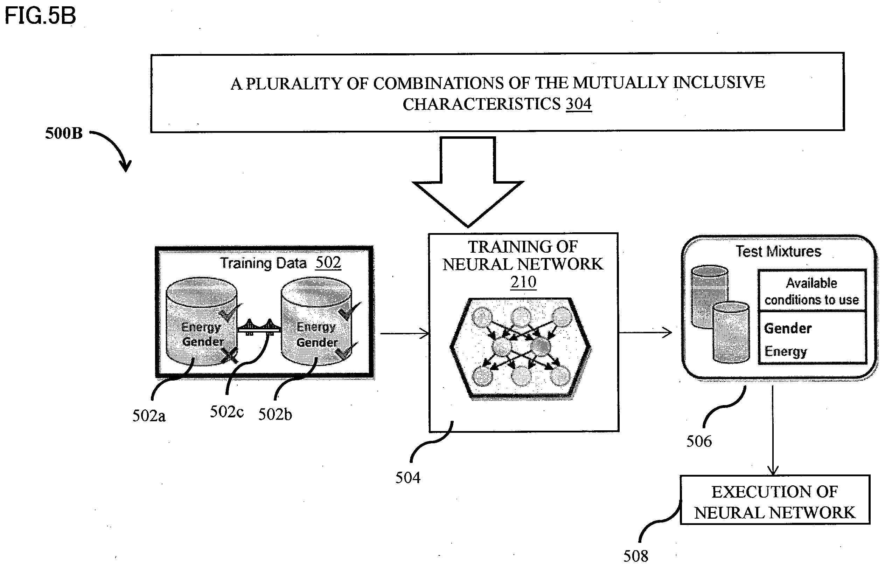

FIG. 5B illustrates a block diagram of training of a neural network with a bridge condition, according to some embodiments of the present disclosure;
[Fig. 6]

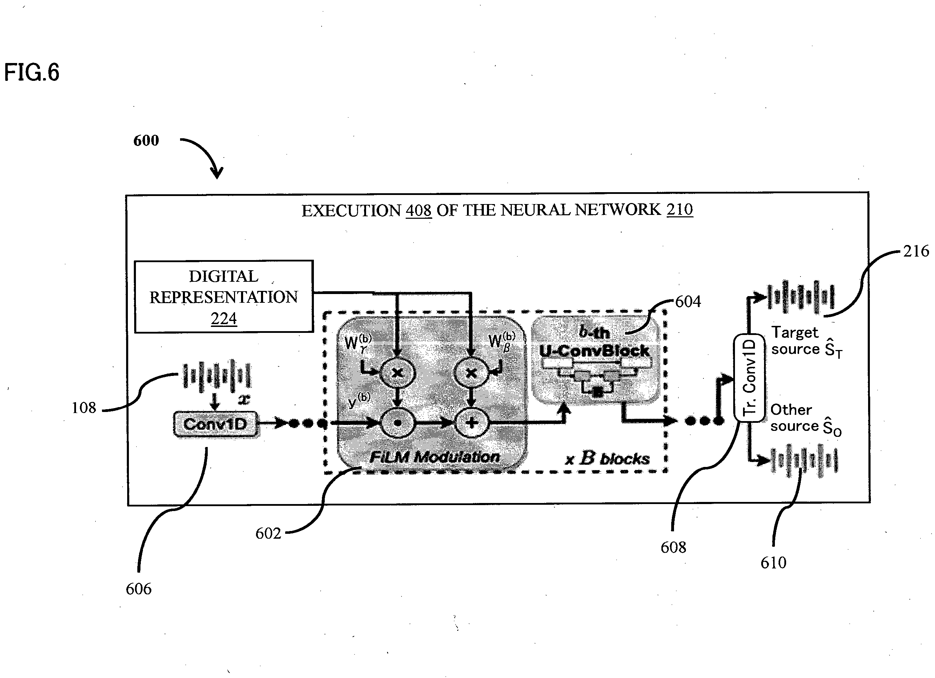

FIG. 6 illustrates a block diagram of execution of the neural network for extracting the target sound signal, according to some embodiments of the present disclosure;
[Fig. 7]

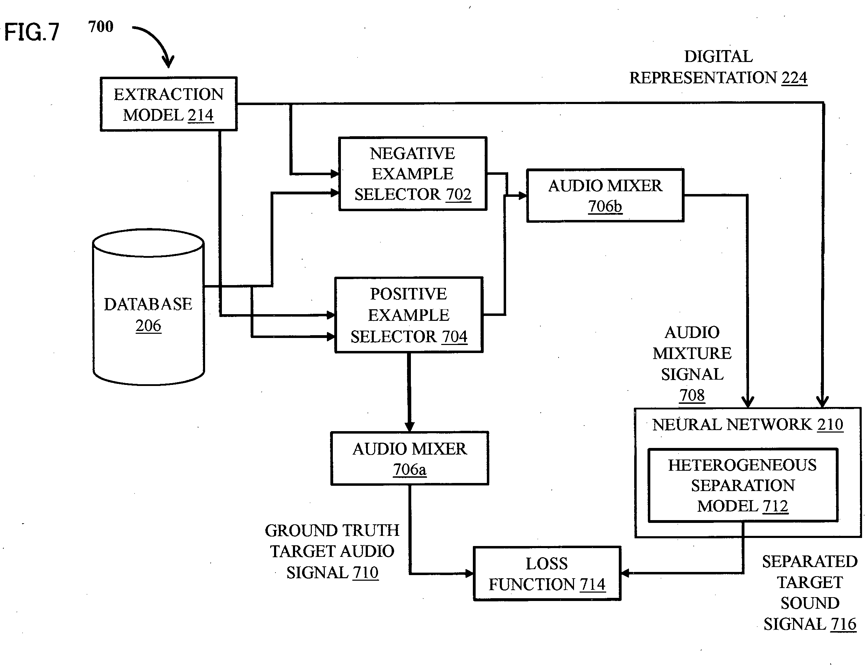

FIG. 7 illustrates a flow diagram showing training of the neural network, in accordance with some embodiments of the present disclosure;
[Fig. 8]

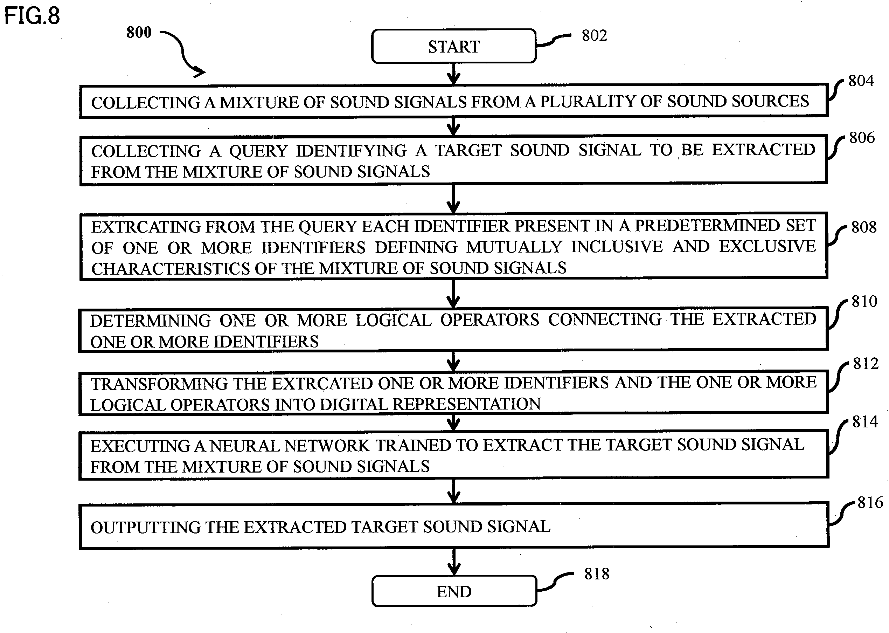

FIG. 8 illustrates a flow diagram of a method executed by the sound processing system for performing signal processing, according to some embodiments of the present disclosure; and
[Fig. 9]

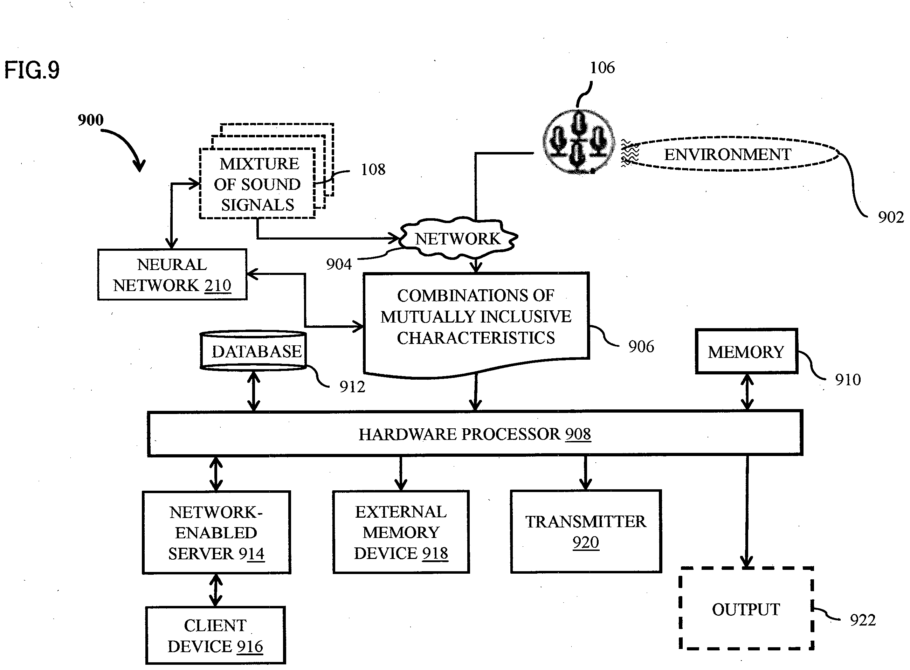

FIG. 9 illustrates a block diagram of the sound processing system for extraction of the target sound signal, according to some embodiments of the present disclosure.

[Description of Embodiments]

In the following description, for purposes of explanation, numerous specific details are set forth in order to provide a thorough understanding of the present disclosure. It will be apparent, however, to one skilled in the art that the present disclosure may be practiced without these specific details. In other instances, apparatuses and methods are shown in block diagram form only in order to avoid obscuring the present disclosure. Contemplated are various changes that may be made in the function and arrangement of elements without departing from the spirit and scope of the subject matter disclosed as set forth in the appended claims.
As used in this specification and claims, the terms "for example," "for instance," and "such as," and the verbs "comprising," "having," "including," and their other verb forms, when used in conjunction with a listing of one or more components or other items, are each to be construed as open ended, meaning that the listing is not to be considered as excluding other, additional components or items. The term "based on" means at least partially based on. Further, it is to be understood that the phraseology and terminology employed herein are for the purpose of the description and should not be regarded as limiting. Any heading utilized within this description is for convenience only and has no legal or limiting effect.
Specific details are given in the following description to provide a thorough understanding of the embodiments. However, understood by one of ordinary skill in the art can be that the embodiments may be practiced without these specific details. For example, systems, processes, and other elements in the subject matter disclosed may be shown as components in block diagram form in order not to obscure the embodiments in unnecessary detail. In other instances, well-known processes, structures, and techniques may be shown without unnecessary detail in order to avoid obscuring the embodiments. Further, like reference numbers and designations in the various drawings indicated like elements.
The present disclosure provides a sound processing system that is configured to identify a target sound signal from a mixture of sounds based on concepts including mutually inclusive concepts, such as, loudness, gender, language, spatial location, and the like. That is, the same target sound signal may be identified using multiple different such concepts. The sound processing system collects the mixture of sound signals and selects a query identifying the target sound signal to be extracted from the mixture of sound signals. Further, the sound processing system extracts from the query one or more identifiers associated with the target sound signal. The one or more identifiers are indicative of characteristics of the target sound signal including mutually inclusive and mutually exclusive characteristics of the target sound signal. The one or more identifiers are used as conditioning input and are transformed into a digital representation in the form of at least one of: one hot conditional vector, multi hot conditional vector, text input or audio input. Further, the digital representation of the conditioning input is utilized as an input to a neural network to extract the target sound signal from the mixture of sound signals. The neural network is trained to extract the target sound signal identified by the digital representation from the mixture of sound signals by combining the digital representation with intermediate outputs of intermediate layers of the neural network processing the mixture of sound signals. The neural network is trained with machine learning to extract the target sound signal identified in a set of predetermined digital representations. In addition, the neural network is trained based on an architecture having one or more intertwined blocks. The one or more intertwined blocks comprise at least one of: a feature encoder, a conditioning network, a separation network, and a feature decoder. The conditioning network comprises a feature-invariant linear modulation (FiLM) layer that takes as an input an encoded feature representation of the mixture of sound signals and modulates the input based on the conditioning input, which is in the form of the digital representation. The FiLM layer processes the conditioning input and sends the processed conditioning input to the separation network, where the target sound signal is separated from the mixture of sound signals. In addition, the FiLM layer repeats the process of sending the conditioning input to the separation network in order to separate the target sound signal from the mixture of sound signals.

System Overview

FIG. 1 illustrates an environment 100 for extraction of a target sound signal, according to some embodiments of the present disclosure. The environment 100 includes a plurality of sound sources 102, one or more identifiers 104, one or more microphones 106 and a mixture of sound signals 108, a network 110 and a sound processing system 112.

The plurality of sound sources 102 may correspond to at least one of: one or more speakers like a person or individual, industrial equipment, vehicles. The mixture of sound signals 108 is collected from the plurality of sound sources 102 with facilitation of the one or more microphones 106. Each sound signal in the mixture of sound signals 108 is associated with criteria or one or more identifiers 104, which define some characteristic of that sound signal in the mixture of sound signals 108. For example, the one or more identifiers 104 may be used to mimic humans' flexibility when selecting which sound source to deal with, by focusing on extracting sounds from the mixture of sound signals 108 based on semantic concepts and criteria of different nature, i.e., heterogeneous. These heterogeneous criteria include in an example, such as whether a speaker is near or far from the one or more microphones 106, is the speaker talking soft or loud or speaks in a certain language. In this manner, the one or more identifiers 104 are associated with a plurality of sound sources 102. Other example of the one or more identifiers 104 comprise such as at least one of: a loudest sound source, a quietest sound source, a farthest sound source, a nearest sound source, a female speaker, a male speaker, and a language specific sound source.

The mixture of sound signals 108 associated with these one or more identifiers 104 may be transmitted to the sound processing system 112 through a network 110.

In one embodiment of the present disclosure, the network 110 is internet. In another embodiment of the present disclosure, the network 110 is a wireless mobile network. The network 110 includes a set of channels. Each channel of the set of channels supports a finite bandwidth. The finite bandwidth of each channel of the set of channels is based on capacity of the network 110. Further, the one or more microphones 106 are arranged in a pattern such that sound signal of each of the plurality of sound sources 102 get captured. The pattern of arrangement of the one or more microphones 106 allows the sound processing system 112 to use the relative time difference between microphones to estimate localization information of the plurality of sound sources 102. The localization information may be provided in the form of direction of arrival of the sound or a distance of the sound source from the one or more microphones 106.

In operation, the sound processing system 112 is configured to collect the mixture of sound signals 108 from the plurality of sound sources 102. In addition, the sound processing system 112 is configured to collect a query identifying a target sound signal to be extracted from the mixture of sound signals 108. Further, the sound processing system 112 is configured to extract from the query each identifier present in a predetermined set of the one or more identifiers defining mutually inclusive and exclusive characteristics of the mixture of sound signals 108. The sound processing system 112 is further configured to determine one or more logical operators connecting the extracted one or more identifiers. The sound processing system 112 is further configured to transform the extracted one or more identifiers and the one or more logical operators into a digital representation predetermined for querying the mixtures of sound signals 108. Furthermore, the sound processing system 112 is configured to execute a neural network trained to extract the target sound signal identified by the digital representation from the mixture of sound signals 108 by combining the digital representation with intermediate outputs of intermediate layers of the neural network processing the mixture of sound signals 108. The sound processing system 112 is further explained in detail in FIG. 2A and FIG. 2B.

FIG. 2A shows a block diagram of the sound processing system 112 to extract a target sound signal 218, according to some embodiments of the present disclosure. The sound processing system 112 includes a memory 202, a processor 204, a database 206, a query interface 208, and an output interface 216. The memory 202 corresponds to at least one of RAM, ROM, EEPROM, flash memory or other memory technology, CD-ROM, digital versatile disks (DVD) or other optical disk storage, magnetic cassettes, magnetic tape, magnetic disk storage, or any other storage medium which can be used to store the desired information, and which can be accessed by the sound processing system 112. The memory 204 includes non-transitory computer-storage media in the form of volatile and/or nonvolatile memory. The memory 204 may be removable, non-removable, or a combination thereof. Exemplary memory devices include solid-state memory, hard drives, optical-disc drives, and the like. The memory 202 stores instructions which are executed by the processor 204. The memory 202 includes a neural network 210, and a transformation module 212. The memory 202 is associated with the database 206 of the sound processing system 112. The sound processing system 112 collects the mixture of sound signals 108 from the plurality of sound sources 102. The database 206 is configured to store the collected mixture of sound signals 108. The mixture of sound signals 108 corresponds to a mixture of sound signals having different characteristics. The characteristics include but are not limited to such as farthest sound source from the one or more microphones 106, nearest sound source, female speaker, French speaker, and the like. In addition, the database 206 stores the characteristics of each of the plurality of sound sources 102. In an embodiment, the database 206 is queried to extract the target sound signal 218 using the query interface 208 of the sound processing system 112. Further, the database 206 stores the predetermined set of the one or more identifiers and the set of predetermined digital representations associated with the target sound signal 218.

The sound processing system 112 is configured to collect a query identifying the target sound signal 218 to be extracted from the mixture of sound signals 108 using the query interface 208.

Further, the sound processing system 112 is configured to extract from the collected query each identifier present in a predetermined set of one or more identifiers with facilitation of the extraction model 214. In an example, identifier corresponds to any characteristic of a sound source such as "loudest" speaker, "female" speaker, and the like. The identifier is extracted from the collected query using the extraction model 214. The collected query is utilized by the extraction model 214 for analysis of the collected query. The extraction model 214 is configured identify each identifier from the collected query based on the analysis of the collected query. Each identifier is present in the predetermined set of one or more identifiers. Further, the predetermined set of one or more identifiers defines the mutually inclusive and exclusive characteristics of the mixture of sound signals 108. In an example, the predetermined set of one or more identifiers are stored in the database 206. The predetermined set of one or more identifiers are generated from past set of data associated with the mixture of sound signals 108. In addition, the predetermined set of one or more identifiers may be generated from the past set of data through one or more third party sources associated with the sound processing system 112.

The collected query may contain a plurality of combination of one or more identifiers. In an example, the collected query may be "Female" and "French" speaker. Here, "Female" speaker and "French" speaker are the two identifiers. The plurality of combination of one or more identifiers is selected using one or more logical operators. The one or more logical operators allow the sound processing system 112 to select the plurality of combinations of one or more identifiers. The extraction model 214 is configured to determine the one or more logical operators connecting each of the one or more identifiers 104 extracted from the predetermined set of one or more identifiers. In addition, the extraction model 214 is configured to generate one or more queries using the collected query, the one or more identifiers 104, and the one or more determined logical operators. The one or more queries are further processed to generate a conditioning input 222. In an example, the extraction model 214 generates queries such as, "Which is the farthest sound signal?", and (&) "Which is the English speaking sound source?". Further, the extraction model 214 utilizes all the queries and generates the conditioning input 222. Here, the conditioning input 222, for example, is "Which is the farthest English speaking sound source?". The conditioning input 222 is an input containing the plurality of combinations of one or more identifiers of the target sound signal 218. The conditioning input 222 corresponds to a processed query containing the plurality of combinations of one or more identifiers.

Furthermore, the conditioning input 222 is utilized by the transformation module 212. The transformation module 212 is configured to transform the extracted one or more identifiers 220 into a digital representation predetermined for querying the mixture of sound signals 108. In one example, the transformation module 212 selects the digital representation of the extracted one or more identifiers 220 from a set of predetermined digital representations of the plurality of combinations of one or more identifiers of the target sound signal 218 (further explained in FIG. 2B and 3A). Further, the one or more identifiers 104 may be used at training time to train the neural network 210 for extracting the target sound signal 218 from the mixture of sound signals 108, by generating different training combinations of the one or more identifiers. Furthermore, the one or more identifiers 104 are utilized by the extraction model 214 to generate the one or more queries. The one or more queries are associated with the mutually inclusive and exclusive characteristics of the target sound signal 218 used during training of the neural network 210. The extraction model 214 is configured to execute the neural network 210 trained to extract the target sound signal from the mixture of sound signals 108 by combining the digital representation of the one or more identifiers 104 with intermediate outputs of intermediate layers of the neural network 210. Further, the extracted target sound signal 218 is outputted from the output interface 216.

FIG. 2B shows a functional block diagram 200B of the sound processing system 112 to extract the target sound signal 218, according to some embodiments of the present disclosure. The sound processing system 112 collects the mixture of sound signals 108. The mixture of sound signals 108 is collected from the plurality of sound sources 102 with facilitation of the one or more microphones 106 (as explained in FIG. 1). The sound processing system 112 is configured to collect the query identifying the target sound signal 218 to be extracted from the mixture of sound signals 108 using the query interface 208. The query interface 208 is configured to accept the one or more identifiers 104 associated with the target sound signal 218 indicative of mutually inclusive and mutually exclusive characteristics of the target sound signal 218 by collecting the query. The query is collected by the query interface 208. In an embodiment, the query is collected using a voice command with facilitation of natural language processing techniques. The collected query is further analyzed to identify the one or more identifiers 104 for generating the processed query (conditioning input 222). For example, one identifier from the one or more identifiers 104 corresponds to a loudest speaker, and another identifier from the one or more identifiers 104 corresponds to a female speaker. Here, mutually inclusive characteristics of the target sound signal 218 corresponds to "loudest" and "female" and the processed query corresponds to "female loudest speaker". The target sound signal 218 associated with the above mentioned one or more identifiers 104 indicative of mutually inclusive and exclusive characteristics is a sound source that is loudest from all the plurality of sound sources 102 and has a female voice. (Explained in detail in FIG. 2C).

Further, the collected query is utilized by the extraction model 214 to extract each identifier present in the predetermined set of one or more identifiers defining mutually inclusive and exclusive characteristics of the mixture of sound signals 108. The extraction model 214 extracts each identifier to generate the conditioning input 222 (As explained above in FIG 2A).

Furthermore, the conditioning input 222 is utilized by the transformation module 212. The transformation module 212 transforms the conditioning input 222 into a digital representation 224 (transformation module is further explained in FIG. 3A). The digital representation 224 is further sent to the neural network 210 for training of the neural network 210 to extract the target sound signal 218 (digital representation is further explained in FIG. 3C) and also at test time to generate an output associated with the extracted target sound signal 218 from the mixture of sound signals 108. The neural network 210 is trained with machine learning with facilitation of one or more machine learning algorithms to extract different sound signals identified in a predetermined set of digital representations. The predetermined set of digital representation includes representation of different sound signals that may be extracted from past set of data or one or more third party sources. The target sound signal 218 is extracted out of these different sound signals present in the predetermined set of digital representation. In an embodiment, the one or more machine learning algorithms used to train the neural network 210 includes but may not be limited to voice activity detection algorithm (VAD), and deep speech algorithm. In general, deep speech algorithm is used for automatically transcribing spoken audio. Deep speech algorithm takes digital audio as an input and returns a "most likely" text transcript of that digital audio. In addition, VAD is a technique in which presence or absence of human speech is detected.

FIG. 2C illustrates a block diagram 200C of the query interface 208 of the sound processing system 112, according to some embodiments of the present disclosure. In an example, the query interface 208 includes a section 208A, and a section 208B. The section 208A corresponds to a section for selecting identifier(s) (the extracted one or more identifiers 220) associated with the target sound signal 218. The second section 208B corresponds to a section for selecting one or more logical operators. The one or more logical operators includes but may not be limited to AND (&) operator 208b1, and OR (∥) operator 208b2. In addition, the one or more logical operators include NOT (!) operator 208c1. In an example, NOT operator 208c1 may be applied with any single identifier of the one or more identifiers 220. The extracted one or more identifiers 220 of the first section 208A are combined using the one or more logical operators (AND operator 208b1 and OR operator 208b2) of the second section 208B to generate a processed query to extract the target sound signal 218 having mutually inclusive and mutually exclusive characteristics. The one or more logical operators allow generation of the processed query that may further function as the conditioning input 222 for extracting the target sound signal 218.

In an embodiment, the section 208A has a dropdown list that allows selecting an appropriate identifier such as "French speaker" 208aa, "English speaker" 208bb, "male speaker" 208cc, "female speaker" 208dd, "loudest speaker" 208ee, "quietest speaker" 208ff and the like. The section 208B has a dropdown list that allows selecting the one or more logical operators. In an example, NOT operator 208c1 is selected and "male speaker" 208cc is selected from the section 208A. In addition, AND operator 208b1 is selected from the drop-down list in the section 208B. Further, "loudest speaker" 208ee is selected from the section 208A The conditioning input 222 generated using inputs selected from the section 208A, the section 208B, and NOT operator 208c1 corresponds to "Not the male speaker 208cc and must be the loudest speaker 208ee".. Furthermore, the query interface 208 includes "Add identifier" section 208d to select multiple identifiers of the one or more identifiers 220. "Add identifier" section 208d may or may not be used.

Further, the query interface 208 has a voice interface 226 that allows a user to give voice commands associated with the target sound signal 218. The voice commands are analyzed using natural language processing techniques and the one or more identifiers 104 (may also be a plurality of combinations of one or more identifiers 304) are extracted from the voice commands to generate the conditioning input 222. The query interface 208 is utilized during training of the neural network 210 for accurately extracting the target sound signal 218.

FIG. 2D illustrates an example of the query interface 208 of the sound processing system 112, according to some embodiments of the present disclosure. The query interface 208 has a section 228. The section 228 allows a user to type a logical expression 230 using the one or more identifiers 220 and the one or more logical operators. The one or more logical operators corresponds to the logical operators explained in FIG. 2C such as AND operator 208b1, OR operator 208b2 and NOT operator 208c1. In an example, the user typed the logical expression 230. The logical expression 230 is represented as:

(French speaker AND (NOT loudest speaker)) OR (Male speaker)

The logical expression 230 denotes that the user has selected a French speaker and it must not be the loudest speaker but may or may not be a male speaker.

Further, the logical expression 230 is not limited to the mentioned expression.

FIG. 3A shows a block diagram of a method for generating the digital representation 224, according to some embodiments of the present disclosure. In an example as illustrated, the database 206 includes a set of predetermined digital representations 302. The set of predetermined digital representations 302 may be extracted from one or more third party databases. The set of predetermined digital representations 302 may include a plurality of combinations of one or more identifiers 304 of the target sound signal 304. The plurality of combinations of one or more identifiers 304 corresponds to at least two or more characteristics of a particular sound source. In an example, the plurality of combinations of one or more identifiers 304 include "loudest" and "female" speaker, "quietest", "male" and "French speaking" speaker and the like (further explained in FIG. 3B). The set of predetermined digital representations 302 are utilized by the transformation module 206 to transform the conditioning input 222 into the digital representation 224.

The transformation module 206 generates the digital representation 224 of the conditioning input 222 of the extracted one or more identifiers 104 from the set of predetermined digital representations 302. For example, if the extracted one or more identifiers 104 corresponds to "loudest", "male" speaker, the transformation module 206 considers "loudest" and "male" speaker as identifiers and transforms these identifiers into a conditioning input for extracting the target sound signal 218 and generates the digital representation 224 of the conditioning input.

FIG. 3B shows an exemplary block diagram 300B of the plurality of combinations of one or more identifiers 304, according to some embodiments of the present disclosure. The plurality of combinations of the one or more identifiers 304 includes but may not be limited to: French male speaker 304a, farthest English speaker 304b, loudest Spanish speaker 304c, and nearest female speaker 304d. The plurality of combinations of the one or more identifiers 304 is not limited to the above mentioned examples.

FIG. 3C shows a block diagram 300C of the digital representation 224, according to some embodiments of the present disclosure. The digital representation 224 corresponds to a transformed representation of the conditioning input 222. The digital representation 224 is represented by at least one of: a one hot conditional vector 306, a multi-hot conditional vector 308, a text description 310 and the like.

In an example, the digital representation 224 includes the one hot conditioning vector 306. If the conditioning input 222 is, "extract the farthest speaker from microphone", the one hot conditional vector 306 will include '1' in position corresponding to the farthest sound source and zero in all other conditions such as closest speaker, male/female, loud/quiet, and the like in a vector of features of the sound signal. In another example, the digital representation 224 includes the multi-hot conditioning vector 308. If the conditioning input 222 is, "extract the loudest female speaker", the multi-hot conditional vector 308 will include 1 in the position corresponding to the loudest speaker and female speaker and all other conditions such as male speaker, quieter speaker, and the like will be set to zero.

In an example, the conditioning input 222 is transformed to the digital representation in the form of a one-hot vector or a multi-hot vector at run-time via one or more of: selection in a drop-down menu of possible options, by rule-based parsing of text input, or by first converting speech to text and then using rule-based parsing. Additionally, to generate multi-hot vector representation, logical operators such as "and" and "or" may be combined to create multi-hot vectors between conditions. In some embodiments, additional one-hot dimensions are added to indicate "and"/"or" queries for generation of digital representations for conditioning inputs.

In yet another example, the digital representation 224 comprises the text description 310, which is especially important when the target sound signal 218 is not speech, but general sound sources such as industrial equipment or vehicles. In this situation descriptions such as male/female, and English/French cannot be used. In this case, the text description 310 is converted into an embedding vector and then the embedding vector is inputted to the neural network 210 instead of one hot conditional vector 306. For example, a model such as a word2vec model or a Bidirectional Representation for Transformers (BERT) model may be used to generate the embedding vector from the text description 310. In general, word2vec is a technique for natural language processing. The word2vec model generally uses a neural network to learn word associations from a large corpus of text. In addition, the BERT model is designed to help computers or machines understand the meaning of ambiguous language in text by using surrounding text to establish context. Irrespective of the type of representation of the digital representation 224, the neural network 210 is trained and guided by the digital representation 224 to extract the target sound signal 218. The training of the neural network 210 is further explained in FIG. 4, and FIG. 5A.

FIG. 4 shows a block diagram illustrating architecture 400 of the neural network 210, in accordance with some embodiments of the present disclosure. The neural network 210 may be a neural network trained to extract the target sound signal 218 and in some examples even localization information of the target sound signal 218. Further, the training is based on the premise that a training data comprises an unordered and heterogeneous set of training data components. For example, for the neural network 210, the digital representation 224 is generated to train the neural network 210 for extracting a target sound signal 410. The target sound signal 410 is same as the target sound signal 218 of FIG. 2.

The neural network 210 is trained to extract the target sound signal 410 from the mixture of sound signals 108 by combining the conditioning input 222 with intermediate outputs of intermediate layers of the neural network 210. The neural network 210 comprises one or more intertwined blocks such as a feature encoder 404, a conditioning network 402, a separation network 406, and a feature decoder 408. In an example, the conditioning network 402 comprises a feature-invariant linear modulation (FiLM) layer (explained in FIG. 6).

The conditioning network 402 takes as input the conditioning input 222 transformed into the digital representation 224. The conditioning network processes the digital; representation 224 which identifies the type of source to be extracted from the mixture of sound signals 108 into a form that is useful for the separation network 406. The feature encoder 404 receives the mixture of sound signals 108. The feature encoder 404 corresponds to a learned one-dimensional convolutional feature encoder (Conv1D) (explained below in FIG. 6). Further, the feature encoder 404 is configured to convert the mixture of sound signals 108 into a matrix of features for further processing by the separation network 406. The separation network 406 corresponds to a convolution block layer (explained in detail in FIG. 6). The separation network 406 utilizes the conditioning input 222 and the matrix of features to separate the target sound signal 410 from the mixture of sound signals 108. The separation network 406 is configured to produce a latent representation of the target sound signal 410. The separation network 406 combines the conditioning input 222 and the matrix of features to generate the latent representation of the target sound signal 410 separated from the mixture of sound signals 108. The feature decoder 408 is typically an inverse process of the feature encoder 404 and converts the latent representation of the target sound signal produced by the separation network 406 into an audio waveform in the form of the target audio signal 410.

The neural network 210 undergoes a training phase which is further illustrated in FIG. 5A.

FIG. 5A shows an exemplar block diagram 500A of training of the neural network 210, according to some embodiments of the present disclosure. To that end, at training time, the plurality of combinations of one or more identifiers 304 are fed into the neural network 210 for training 504 of the neural network 210. The plurality of combinations of one or more identifiers 304 are converted to the set of predetermined digital representations 302. In an embodiment, the neural network 210 is trained using the set of predetermined digital representations 302 of the plurality of combinations of one or more identifiers. In addition, the neural network 210 is trained with a training data 502.

In an example, the training data 502 includes a first training dataset 502a and a second training dataset 502b. The first training dataset 502a comprises sound data recorded in reverberant conditions and includes spatial data of the sound sources with respect to the one or more microphones 106 but does not have data associated with language of the sound sources. The second training dataset 502b has data in multiple languages but was recorded in non-reverberant conditions. Therefore, the second training dataset comprises language related data about the sound sources but does not include spatial data of the sound sources. The neural network 210 is trained using both the first training dataset 502a and the second training dataset 502b. Further, the trained neural network 210 is configured to separate sound sources based on language in reverberant conditions by using a conditioning input as described previously, even though that combination was missing in the training data 502 during training 504. To enable this, the trained neural network 210 generates . test mixtures 506 along with all available combinations of characteristic conditions of the sound source for execution 508 of the neural network 210. In an example, while execution 508, if a required condition is language specific, but the recorded sound is reverberant then the trained neural network 210 extracts the target sound source based on the required condition (language) even though reverberant data with language labels was missing in the training data 502 during training 504. This is particularly useful when there exists a bridge condition between the two different training datasets.

FIG. 5B shows an exemplary block diagram 500B of training of the neural network 210 with bridge condition 502c, according to some embodiments of the present disclosure. The plurality of combinations of the mutually inclusive characteristics 304 are fed into the neural network 210 for training 504 of the neural network 210. The plurality of combinations of the mutually inclusive characteristics 304 is in the form of the digital representation 224. In addition, the neural network 210 is trained with the training data 502. In an example, the training data 502 includes the first training dataset 502a and the second training dataset 502b. The first training dataset 502a includes gender data of the sound source but does not include energy data. The second training dataset 502b includes energy data and gender data. The neural network 210 is trained with the first training dataset 502a and the second training dataset 502b.

In an example, the bridge condition 502c is loudest speaker in a mixture of sound signals. Such energy conditioning is convenient because training samples can often be easily introduced in the training dataset 502, as it is easy to control the loudness of each source when generating the mixture of sound signals. That is, a simple gain can be applied to isolated source examples when creating the mixtures of sound signals during the training 504 of the neural network 210, such that any dataset can be made to have the ability to condition on energy. The terms loudness and energy are used interchangeably, to represent some notion of volume of the sound signal.

The trained neural network 210 generates test mixtures 506 along with all possible combinations of characteristic conditions of the sound source for execution 508 of the neural network 210. In an example, if only the first training dataset 502a is accessed for extracting a target source specific to gender, the neural network 210 will be able to extract the target source specific to gender accurately due to the bridge condition 502c used in the training data. The bridge condition allows gender conditioning in the first training dataset 502a, even though gender conditioning is unavailable in the first training dataset 502a during training 504. In addition, during execution 508, all possible conditions are available for extracting the target source. The execution 508 of the neural network 210 is further explained in FIG. 6.

FIG. 6 shows a block diagram 600 for the execution 508 of the neural network 210 for extracting the target sound signal 218, according to some embodiments of the present disclosure. The neural network 210 inputs and outputs time domain signals and includes following components: (1) a learned one-dimensional convolutional feature encoder (Conv1D) 606 (hereinafter feature encoder 606) configured to obtain an intermediate representation, (2) a feature-invariant linear modulation (FiLM) layer 602, (3) B intermediate blocks 604 for processing the intermediate representations, and (4) a learned one-dimensional transposed convolutional decoder 608 for returning to a time-domain signal. The FiLM layer 602 corresponds to B-FiLM layers. The learned one-dimensional convolutional feature encoder (Conv1D) 606 corresponds to the feature encoder 404 of FIG. 4. The B intermediate blocks 604 correspond to a convolution block layer 604. The convolution block layer 604 corresponds to the separation network 406 of FIG. 4. The convolution block layer 604 is a stack of U-net convolutional blocks. Each U-net block contains several convolution blocks that learn a high-level latent representation and several transposed convolution blocks that go from the high-level latent representation back to a representation comparable to the U-net input. In an example, the combination of FiLM layer 602 (B-FiLM layers) and the B intermediate blocks 604 is repeated B times.

The mixture of sound signals 108 are sent to the feature encoder 606. The feature encoder 506 converts the mixture of sound signals 108 into a matrix of features for further processing by the FiLM layer 602 and the convolution block layer 604. The FiLM layer 602 takes as an input the matrix of features of the mixture of sound signals 108. In addition, the FiLM layer 602 takes as the input the digital representation 224 (for example, the one hot conditional vector 306 shown in FIG. 3C). The FiLM layer 602 processes the input (the matrix of features and the one hot conditional vector 306) and sends the processed input to the convolution block layer 604. The convolution layer 604 combines the matrix of features and the processed conditioning input to produce a latent representation of the target sound signal 218. The latent representation is sent to the learned one-dimensional transposed convolutional decoder 608 for separating the target sound signal 218 from other sound sources 610. The FiLM layer 602 and the convolution block layer 604 are trained and executed to extract the target sound signal 218 and estimate localization information of the extracted target sound signal 218. The localization information of the target sound signal 218 is indicative of a location of an origin of the extracted target sound signal 218.

In an example, a mixture x of sound signals is considered, where

$$x = \sum_{j=1}^{N} s_j \in \mathbb{R}^T$$

of N sound source waveforms $s_1, \ldots s_N$ with T time-domain samples. In general, it is assumed that there exists a signal characteristic condition C (e.g., the spatial location of a sound source) in a set C of conditions, and a desired concept value v for that condition (e.g., far, or near) which belongs to the set V of all discriminative concepts. Now, given the condition C and its concept value v, a target submix $s_T$ of all sound sources whose condition C matches the concept value v is retrieved from the input mixture x. The target submix

$$s_T = \sum_{j=1}^{N} \delta \left( C(s_j) = v \right) s_j$$ , where $\delta$ is an

indicator function, and the same notation C is used to denote a signal characteristic and the function $C: R^T \to V$ which returns the value of that characteristic for an input signal.

The input signals are the signals from speech sources, and it is considered that signal characteristics C in the set C= {E, G, S, L}, where E denotes the signal-energy (with values low/high), G denotes the gender (female/male as self-identified by the dataset's speakers), S denotes the spatial location (near/far), and L denotes the language (English/French/German/Spanish). Thus, a target is specified based on a total of |V| = 2 + 2 + 2 + 4 = 10 concepts. A semantic discriminative information is encoded for the desired concept v in a one-hot vector c = 1[v] $\in$ {0, 1} $^{|V|}$ which has one only at the corresponding index of the concept v, given some arbitrary ordering of V. The goal of the task is then to train a separation model f, parameterized by $\theta$, which takes as input a mixture of sound sources x alongside a conditioning vector c and estimates the target submix $\hat{s}_T$ as follows: $\hat{s}_T$ = f(x, c; $\theta$).

The FiLM layer 602 is added at the input of each of the B U-ConvBlocks (convolution block layer 604), as shown in Fig. 6. In addition, some extra parameters for scaling and bias are B pairs of matrices $(W\beta, W\gamma)$ with size $|V| \times C_{in}$, where $C_{in}$ = 512 is the number of intermediate channels in each processing block. In an example, the network f is set to produce estimates $\hat{s}_T$ and $\hat{s}_O$ for $\hat{s}_T$ and the submix $\hat{s}_O$ of other (non-target) sources, enforcing $\hat{s}_T$ + $\hat{s}_O$ = x = $\hat{s}_T$ + $\hat{s}_O$.

FIG. 7 shows a flow diagram 700 illustrating training of the neural network 210 for acting as a heterogeneous separation model 712. The flow diagram 700 includes the database 206, the extraction model 214, the conditioning input 222 transformed in the form of digital representation 224, a negative example selector 702, a positive example selector 704, an audio mixer 706a, an audio mixer 706b, the neural network 210 acting as the heterogeneous separation model 712 and a loss function 714. The database 206 is an audio database that includes collection of isolated sound signals. For example, different speech signals for human voice applications, and associated metadata such as distance of a speaker to a microphone, signal level, language, and the like for each isolated sound signal.

The extraction model 214 is configured to generate one or more random queries associated with the mutually inclusive characteristics of the target sound signal 610. The one-hot conditional vector 306 or the multi-hot conditional vector 308 of the accepted one or more identifiers 220 is randomly selected based on the one or more random queries generated. The multi-hot conditional vector 308 may be a multi-hot "and" conditioning vector or a multi-hot "or" conditioning vector. For multi-hot "and" conditioning all selected identifiers must be true for a sound signal to be relevant target sound signal. For multi-hot "or" conditioning vector at least one of the selected identifiers needs to be true. For the text description 310 conditioning, all sound signals in the database 206 are required to have one or more natural language descriptions of the corresponding sound signal.

In an example, an audio signal is randomly selected from the database 206 as a positive example and the corresponding text description is used as the conditioning input 222. The conditioning input 222 transformed into the digital representation 224 is sent to the heterogeneous separation model 712 for further processing. The conditioning input 222 transformed into the digital representation 224 is sent to the negative example selector 702 and the positive example selector 704. The negative example selector 702 returns zero, one, or multiple sound signals from the database 206 that are not relevant for the given conditioning input used for training of the heterogeneous separation model 712 for the one or more random queries. In an embodiment, the negative example selector 702 may return zero or non-relevant sound signals so that the heterogeneous separation model 712 can be robust at inference time.

The positive example selector 704 returns zero, one, or multiple sound signals from the database 206 that are relevant for the given conditioning input. It is important to sometimes have the positive example selector return zero relevant audio signals so the heterogeneous target sound extraction model can be robust to this case at inference time.

The zero, one, or multiple sound signals from the positive example selector 704 are passed through the audio mixer 706a to obtain a ground truth target sound signal for training. The sound signals returned from both the positive example selector 704 and the negative example selector 702 are also passed to the audio mixer 706b to create an audio mixture signal 708 during training which is inputted into the heterogeneous separation model 712. The heterogeneous separation model 214 processes the digital representation 224 and the audio mixture signal 708 to extract separated target sound signal 716.

The ground truth target audio signal is compared with the separated target sound signal 716 with facilitation of the loss function 714. In other words, the loss function 714 compares the ground truth target audio signal 710 with the separated target sound signal 716 returned by the heterogeneous separation model 712 using the loss function 714. In an example, relevant loss functions comparing the two sound signals (e.g., SNR, scale-invariant source to distortion ratio, mean-squared error, etc.), can be computed in time domain, frequency domain, or a weighted combination of time-domain and frequency-domain losses.

In an example, several sound sources such as multiple people speaking may be present, such as in a business meeting or at a party, and a machine listening device (e.g., a robot or hearing aid-like device) may be required that can focus on the speech of a particular person. However, the machine listening device needs input from a user to identify which person to focus on, which is often context dependent. For example, if two people are speaking and one is male and one is female, the user my give input to the machine listening device to focus on the male speaker. In an example, the machine listening device comprises the sound processing system 112 which uses the neural network 210 to perform the task of identification of the sound signal of interest using the heterogeneous separation model 712. If both speakers are male, then the heterogeneous separation model 712 is utilized to describe the speech of the person of interest, such as how far they are from the microphone or the volume of their speech relative to competing speakers. The heterogeneous separation model 712 allows for using a control device to select the signal characteristic for a given mixture of speakers that is most appropriate for isolating the speaker of interest (a particular sound source) in the context of a particular situation.

The heterogeneous separation model 712 is trained such that it can perform multi condition-based separation as described above. Typically, source separation models are trained using mixture/target pairs, where two or more isolated source signals (e.g., speech waveforms) are combined to create a mixture, and the isolated signals are used as targets. This combination, also referred to as a mixing process, takes each isolated source signal and optionally applies some basic signal processing applications (e.g., apply a gain, equalization, etc.) to the isolated sources and then combines them together to obtain the target audio mixture signal. The processed isolated sources then serve as training targets for a given audio mixture signal. However, the heterogeneous separation model 712 uses a triplet containing (1) an audio mixture signal, (2) a digital representation, for example represented by a one-hot conditional vector, and (3) a target signal corresponding to the description represented by the one-hot conditional vector.

Another example of the heterogeneous separation model 712 system may be in combination with a system that identifies the signal characteristics of all speakers present in a mixture signal using multiple criteria, but without isolating them. For example, detecting the gender or language being spoken is possible even when speech is overlapping. Identified values of these criteria are used to conditionally extract the isolated signals of speakers present in the audio mixture. Further, the different criteria present in the audio mixture are combined using a process similar to "logical and" (i.e., the one-hot vector, become a multi-hot, with ones in the location of all relevant criteria), and use all criteria to separate the signal. Also, each of the criteria may be used independently and assess which of the conditioning criteria results in the best target signal separation performance for a given mixture.

FIG. 8 shows a flow chart 800 depicting a method for identifying a target sound signal based on the embodiments described above, according to some embodiments of the present disclosure. The method 800 is performed by the sound processing system 112. The flow chart initiates at step 802. Following step 802, at step 804, the method includes collecting the mixture of sound signals 108 from the plurality of sound sources 102 with facilitation of the one or more microphones 106. The plurality of sound sources 102 corresponds to at least one of speakers, a person or individual, industrial equipment, and vehicles. The mixture of sound signals 108 are collected from the plurality of sound sources 102 with facilitation of the one or more microphones 106 along with the one or more identifiers 104.

At step 806, the method includes collecting the query identifying the target sound signal 218 to be extracted from the mixture of sound signals 108 with facilitation of the query interface 208 (as explained in FIG. 2). The query is indicative of the mutually inclusive and exclusive characteristics of the target sound signal 218. The query is associated with the one or more identifiers 104 of the plurality of sound sources 102. The one or more identifiers 104 comprises at least one loudest sound source, quietest sound source, farthest sound source, nearest sound source, female speaker, male speaker, and language specific sound source.

At step 808, the method includes extracting from the query, each identifier present in the predetermined set of one or more identifiers defining mutually inclusive and exclusive characteristics of the mixture of sound signals 108 with facilitation of the extraction model 214 (as explained in FIG. 2B). Following step 808, at step 810, the method includes determining the one or more logical operators connecting the extracted one or more identifiers 220 using the query interface 208 (as explained in FIG. 2C).

At step 812, the method includes transforming the extracted one or more identifiers 220 into the digital representation 224 with facilitation of the transformation module 206 (as explained in FIG. 3A and FIG. 3C). The transformation module 206 is configured for generating the digital representation 224 of the extracted one or more identifiers 220 from the set of predetermined digital representations 302 of the plurality of combinations of the mutually inclusive characteristics 304 of the target sound signal 218. The digital representation 224 is represented by the one hot conditional vector 306, or the multi-hot conditional vector 308, and the text description 310 (as explained in FIG. 3C).

At step 814, the method includes executing the neural network 210 trained to extract the target sound signal 218 from the mixture of sound signals 108 with facilitation of the extraction model 214. In addition, the extraction model 214 is configured to generate one or more queries associated with the mutually inclusive and exclusive characteristics of the target sound signal during training of the neural network 210. The neural network 210 is trained using the set of predetermined digital representations 302 of the plurality of combinations of the mutually inclusive characteristics 304 for extracting the target sound signal 218. Further, the neural network 210 is trained to produce localization information of the target sound signal 218 indicative of a location of an origin of a sound source of the plurality of sound sources 102 of the target sound signal 218.

At step 816, the method incudes outputting the extracted target sound signal along with the localization information with facilitation of the output interface 216. At step 814, the method terminates.

FIG. 9 shows a block diagram 900 of the sound processing system 112 for performing processing of the mixture of sound signals 108, according to some embodiments of the present disclosure. In some example embodiments, the block diagram 900 includes the one or more microphones 106 that collect data including the mixture of sound signals 108 of the plurality of sound sources 102 from an environment 902.

The sound processing system 112 includes a hardware processor 908. The hardware processor 908 is in communication with a computer storage memory, such as a memory 910. The memory 910 includes stored data, including algorithms, instructions and other data that is implemented by the hardware processor 908. It is contemplated that the hardware processor 908 includes two or more hardware processors depending upon the requirements of the specific application. The two or more hardware processors are either internal or external. The sound processing system 112 is incorporated with other components including output interfaces and transceivers, among other devices,

In some alternative embodiments, the hardware processor 908 is connected to the network 904, which is in communication with the mixture of sound signals 108. The network 904 includes but is not limited to, by nonlimiting example, one or more local area networks (LANs) and/or wide area networks (WANs). The network 904 also includes enterprise-wide computer networks, intranets, and the Internet. The sound processing system 112 includes one or more number of client devices, storage components, and data sources. Each of the one or more number of client devices, storage components, and data sources comprise a device or multiple devices cooperating in a distributed environment of the network 904.

In some other alternative embodiments, the hardware processor 908 is connected to a network-enabled server 914 connected to a client device 916. The network-enabled server 914 corresponds to a dedicated computer connected to a network that run software intended to process client requests received from the client device 916 and provide appropriate responses on the client device 916. The hardware processor 908 is connected to an external memory device 918 that stores all necessary data used in the target sound signal extraction, and a transmitter 920. The transmitter 920 helps in transmission of data between the network-enabled server 914 and the client device 916. Further, an output 922 associated with the target sound signal and localization information of the target sound signal is generated.

The mixture of sound signals 108 are further processed by the neural network 210. The neural network 210 is trained with combinations of mutually inclusive characteristics 906 of each of the sound signals. The plurality of combinations of the mutually inclusive characteristics 906 are fed into the neural network 210 for training of the neural network 210 (as explained in FIG. 7). The plurality of combinations of the mutually inclusive characteristics 906 is in the form of digital representation 224.

Many modifications and other embodiments of the disclosures set forth herein will come to mind to one skilled in the art to which these disclosures pertain having the benefit of the teachings presented in the foregoing descriptions and the associated drawings. It is to be understood that the disclosures are not to be limited to the specific embodiments disclosed and that modifications and other embodiments may be within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1.    A sound processing system (112) to extract a target sound signal (218), the target sound signal (218) being from a sound source of interest, the sound processing system (112) comprising:

   at least one processor (204); and
   memory (202) having instructions stored thereon that, when executed by the at least one processor (204), cause the sound processing system (112) to:

      collect a mixture of sound signals (108) from a plurality of sound sources along with the target sound signal (218);
      collect a query identifying the target sound signal (218) to be extracted from the mixture of sound signals (108), the query comprising one or more identifiers (104);

extract from the query each identifier (104) of the one or more identifiers (104), said each identifier (104) being present in a predetermined set of a plurality of identifiers (104), each identifier (104) defining at least one of mutually inclusive and mutually exclusive characteristics of the mixture of sound signals (108);

determine one or more logical operators connecting the extracted one or more identifiers (104);

transform the extracted one or more identifiers (104) and the one or more logical operators into a digital representation (224) predetermined for querying the mixture of sound signals (108);

execute a neural network (210) trained to extract the target sound signal (218), identified by the digital representation (224), from the mixture of sound signals (108), by combining the digital representation (224) with intermediate outputs of intermediate layers of the neural network (210) processing the mixture of sound signals (108), wherein the neural network (210) is trained with machine learning to extract different sound signals identified in a predetermined set of digital representations (224); and

output the extracted target sound signal (218);

**characterized in that**

the digital representation (224) corresponds to a conditioning input, wherein the conditioning input comprises one or more of the mutually inclusive characteristics of the target sound signal (218); and

the predetermined set of identifiers (104) is associated with the plurality of sound sources (102), wherein the plurality of identifiers (104) in the predetermined set of identifiers (104) defining mutually inclusive characteristics comprises more than one of: a loudest sound source identifier (104), quietest sound source identifier (104), a farthest sound source identifier (104), a nearest sound source identifier (104), a female speaker identifier (104), a male speaker identifier (104), and a language specific sound source identifier (104).

2. The sound processing system (112) of claim 1, wherein sound signals in the mixture of sound signals (108) are collected from a plurality of sound sources (102) with facilitation of one or more microphones (106), wherein each sound source of the plurality of sound sources (102) corresponds to at least one of a speaker, a person or an individual, an industrial equipment, a vehicle, or a natural sound.

3. The sound processing system (112) of claim 1, wherein the one or more identifiers (104) are combined using the one or more logical operators to extract the target sound signal (218) having mutually inclusive and exclusive characteristics, wherein the one or more logical operator comprises at least one of: NOT operator, AND operator, and OR operator, wherein NOT operator is used with any single identifier (104) of the one or more identifiers (104).

4. The sound processing system (112) of claim 1, wherein the neural network (210) is trained using the predetermined set of digital representations (224) of a plurality of combinations of identifiers (104) in the predetermined set of one or more identifiers (104).

5. The sound processing system (112) of claim 1, wherein the neural network (210) is trained using a positive example selector (704) and a negative example selector (702) to extract the target sound signal (218).

6. The sound processing system (112) of claim 1, wherein the digital representation (224) is represented by at least one of: a one hot conditional vector (306), a multi-hot conditional vector (308), and text description.

7. The sound processing system (112) of claim 1, wherein the intermediate layers of the neural network (210) comprise one or more intertwined blocks, wherein each of the one or more intertwined blocks comprise at least one of: a feature encoder (404), a conditioning network (402), a separation network (406), and a feature decoder (408), wherein the conditioning network (402) comprises a feature-invariant linear modulation (FiLM) layer (602) that takes as an input the mixture of sound signals (108) and the digital representation (224) and modulates the input into the conditioning input, wherein the FiLM layer (602) processes the conditioning input and sends the processed conditioning input to the separation network (406).

8. The sound processing system (112) of claim 7, wherein

(i) the separation network (406) comprises a convolution block layer (604) that utilizes the conditioning input to separate the target sound signal (218) from the mixture of sound signals (108), wherein the separation network (406) is configured to produce a latent representation of the target sound signal (218); and/or

(ii) the feature decoder (408) converts a latent representation of the target sound signal (218) produced by the separation network (406) into an audio waveform.

9. A computer-implemented method for extracting a target sound signal (218), the target sound signal (218) being from a sound source of interest, the method comprising:

collecting a mixture of sound signals (108) from a plurality of sound sources (102) along with the target sound signal (218);

selecting a query identifying the target sound signal (218) to be extracted from the mixture of sound signals (108), the query comprising one or more identifiers (104);

extracting from the query each identifier (104) of the one or more identifiers (104), said each identifier (104) being present in a predetermined set of a plurality of identifiers (104), each identifier (104) defining at least one of mutually inclusive and mutually exclusive characteristics of the mixture of sound signals (108);

determining one or more logical operators connecting the extracted one or more identifiers (104);

transforming the extracted one or more identifiers (104) and the one or more logical operators into a digital representation (224) predetermined for querying the mixture of sound signals (108);

executing a neural network (210) trained to extract the target sound signal (218) identified by the digital representation (224) from the mixture of sound signals (108) by combining the digital representation (224) with intermediate outputs of intermediate layers of the neural network (210) processing the mixture of sound signals (108), wherein the neural network (210) is trained with machine learning to extract the target sound signal (218) identified in the predetermined set of digital representations (224); and

outputting the extracted target sound signal (218);

**characterized in that**

the digital representation (224) corresponds to a conditioning input, wherein the conditioning input comprises one or more of the mutually inclusive characteristics of the target sound signal (218); and

the predetermined set of identifiers (104) is associated with the plurality of sound sources (102), wherein the plurality of identifiers (104) in the predetermined set of identifiers (104) comprises more than one of: a loudest sound source identifier (104), quietest sound source identifier (104), a farthest sound source identifier (104), a nearest sound source identifier (104), a female speaker identifier (104), a male speaker identifier (104), and a language specific sound source identifier (104).

10. The computer-implemented method of claim 9, wherein the mixture of sound signals (108) are collected from a plurality of sound sources (102) with facilitation of one or more microphones (106), wherein the plurality of sound sources (102) corresponds to at least one of speakers, a person or an individual, industrial equipment, and vehicles.

11. The computer-implemented method of claim 9, wherein the one or more identifiers (104) are combined using the one or more logical operators to extract the target sound signal (218) having mutually inclusive and exclusive characteristics, wherein the neural network (210) is preferably trained using the set of predetermined digital representations (224) of a plurality of combinations of identifiers (104) in the predetermined set of one or more identifiers (104).

12. The computer-implemented method of claim 9, further comprising: generating one or more queries associated with the mutually inclusive and exclusive characteristics of the target sound signal (218) during training of the neural network (210).

13. The computer-implemented method of claim 9, wherein the intermediate layers of the neural network (210) comprises one or more intertwined blocks, wherein each of the one or more intertwined blocks comprise at least one of: a feature encoder (404), a conditioning network (402), a separation network (406), and a feature decoder (408), wherein the conditioning network (402) comprises to a feature-invariant linear modulation (FiLM) layer that takes as an input the mixture of sound signals (108) and modulates the input into the conditioning input, wherein the FiLM layer (602) processes the conditioning input and sends the processed conditioning input to the separation network (406).

**Patentansprüche**

1. Schallverarbeitungssystem (112) zum Extrahieren eines Zielschallsignals (218), wobei das Zielschallsignal (218) von einer Schallquelle von Interesse stammt, wobei das Schallverarbeitungssystem (112) umfasst:

zumindest einen Prozessor (204); und

einen Speicher (202) mit darauf gespeicherten Anweisungen, die, bei Ausführung durch den zumindest einen Prozessor (204), das Schallverarbeitungssystem (112) veranlassen zum:

Sammeln einer Mischung von Schallsignalen (108) aus einer Vielzahl von Schallquellen zusammen mit dem Zielschallsignal (218);

Erheben einer Abfrage, die das aus der Mischung von Schallsignalen (108) zu extrahierende Zielschallsignal (218) identifiziert, wobei die Abfrage einen oder mehrere Identifikatoren (104) umfasst;

Extrahieren, aus der Abfrage , jedes Identifikators (104) des einen oder der mehreren Identifikatoren (104), wobei jeder Identifikator (104) in einem vorbestimmten Satz einer Vielzahl von Identifikatoren (104) vorhanden ist, wobei jeder Identifikator (104) mindestens eines von sich gegenseitig einschließenden und sich gegenseitig ausschließenden Merkmalen der Mischung von Schallsignalen (108) definiert;

Bestimmen eines oder mehrerer logischer Operatoren, die den einen oder die mehreren extrahierten Identifikatoren (104) verbinden;

Transformieren des einen oder der mehreren extrahierten Identifikatoren (104) und des einen oder der mehreren logischen Operatoren in eine digitale Darstellung (224), die für die Abfrage der Mischung von Schallsignalen (108) vorbestimmt ist;

Ausführen eines neuronalen Netzwerks (210), das trainiert ist, um das Zielschallsignal (218), das durch die digitale Darstellung (224) identifiziert wird, aus der Mischung von Schallsignalen (108) zu extrahieren, indem die digitale Darstellung (224) mit Zwischenausgaben von Zwischenschichten des neuronalen Netzwerks (210), das die Mischung von Schallsignalen (108) verarbeitet, kombiniert wird, wobei das neuronale Netzwerk (210) mit maschinellem Lernen trainiert wird, um verschiedene Schallsignale zu extrahieren, die in einem vorbestimmten Satz digitaler Darstellungen (224) identifiziert werden; und

Ausgeben des extrahierten Zielschallsignals (218);

**dadurch gekennzeichnet, dass**
die digitale Darstellung (224) einer Bedingungseingabe entspricht, wobei die Bedingungseingabe eine oder mehrere der sich gegenseitig einschließenden Merkmale des Zielschallsignals (218) umfasst; und der vorbestimmte Satz von Identifikatoren (104) mit der Vielzahl von Schallquellen (102) verbunden ist, wobei die Vielzahl von Identifikatoren (104) in dem vorbestimmten Satz von Identifikatoren (104), die sich gegenseitig einschließende Merkmale definieren, mehr als eines umfasst von: einem Identifikator für die lauteste Schallquelle (104), einem Identifikator für die leiseste Schallquelle (104), einem Identifikator für die am weitesten entfernte Schallquelle (104), einem Identifikator für die nächstgelegene Schallquelle (104), einem Identifikator für eine weibliche Sprecherin (104), einem Identifikator für einen männlichen Sprecher (104) und einem Identifikator für eine sprachenspezifische Schallquelle (104).

2. Schallverarbeitungssystem (112) nach Anspruch 1, wobei Schallsignale in der Mischung von Schallsignalen (108) von einer Vielzahl von Schallquellen (102) mit Unterstützung eines oder mehrerer Mikrofone (106) gesammelt werden, wobei jede Schallquelle der Vielzahl von Schallquellen (102) mindestens einem Sprecher, einer Person oder einem Individuum, einer Industrieanlage, einem Fahrzeug oder einem natürlichen Schall entspricht.

3. Schallverarbeitungssystem (112) nach Anspruch 1, wobei der eine oder die mehreren Identifikatoren (104) unter Verwendung des einen oder der mehreren logischen Operatoren kombiniert werden, um das Zielschallsignal (218) mit gegenseitig einschließenden und ausschließenden Merkmalen zu extrahieren, wobei der eine oder die mehreren logischen Operatoren mindestens eines umfassen von: einem NICHT-Operator, einem UND-Operator und einem ODER-Operator, wobei der NICHT-Operator mit einem beliebigen einzelnen Identifikator (104) des einen oder der mehreren Identifikatoren (104) verwendet wird.

4. Schallverarbeitungssystem (112) nach Anspruch 1, wobei das neuronale Netzwerk (210) unter Verwendung des vorbestimmten Satzes digitaler Darstellungen (224) einer Vielzahl von Kombinationen von Identifikatoren (104) in dem vorbestimmten Satz von einem oder mehreren Identifikatoren (104) trainiert wird.

5. Schallverarbeitungssystem (112) nach Anspruch 1, wobei das neuronale Netzwerk (210) unter Verwendung eines Selektors für positive Beispiele (704) und eines Selektors für negative Beispiele (702) trainiert wird, um das Zielschallsignal (218) zu extrahieren.

6. Schallverarbeitungssystem (112) nach Anspruch 1, wobei die digitale Darstellung (224) durch mindestens eines repräsentiert wird von: einem bedingten One-hot-Vektor (306), einem bedingten Multi-hot-Vektor (308) und einer Textbeschreibung.

7. Schallverarbeitungssystem (112) nach Anspruch 1, wobei die Zwischenschichten des neuronalen Netzwerks (210) einen oder mehrere miteinander verflochtene Blöcke umfassen, wobei jeder des einen oder der mehreren miteinander verflochtenen Blöcke mindestens eines umfasst von: einem Merkmalscodierer (404), einem Bedingungsnetzwerk (402), einem Trennnetzwerk (406) und einem Merkmalsdecodierer (408), wobei das Bedingungsnetzwerk (402) eine merkmalsinvariante lineare Modulationsschicht (FiLM, engl. feature-invariant linear modulation) (602) umfasst, die als Eingabe die Mischung von Schallsignalen (108) und die digitale Darstellung (224) nimmt und die Eingabe in die Bedingungseingabe moduliert, wobei die FiLM-Schicht (602) die Bedingungseingabe verarbeitet und die verarbeitete Bedingungseingabe an das Trennnetzwerk (406) sendet.

8. Schallverarbeitungssystem (112) nach Anspruch 7, wobei

(i) das Trennnetzwerk (406) eine Faltungsblockschicht (604) umfasst, die die Bedingungseingabe verwendet, um das Zielschallsignal (218) von der Mischung von Schallsignalen (108) zu trennen, wobei das Trennnetzwerk (406) eingerichtet ist, eine latente Darstellung des Zielschallsignals (218) zu erzeugen; und/oder
(ii) der Merkmalsdecodierer (408) eine latente Darstellung des Zielschallsignals (218), das durch das Trennnetzwerk (406) erzeugt wird, in eine Audiowellenform umwandelt.

9. Computerimplementiertes Verfahren zum Extrahieren eines Zielschallsignals (218), wobei das Zielschallsignal (218) von einer Schallquelle von Interesse stammt, wobei das Verfahren umfasst:

Sammeln einer Mischung von Schallsignalen (108) aus einer Vielzahl von Schallquellen (102) zusammen mit dem Zielschallsignal (218);
Erheben einer Abfrage, die das aus der Mischung von Schallsignalen (108) zu extrahierende Zielschallsignal (218) identifiziert, wobei die Abfrage einen oder mehrere Identifikatoren (104) umfasst;
Extrahieren, aus der Abfrage, jedes Identifikators (104) des einen oder der mehreren Identifikatoren (104), wobei jeder Identifikator (104) in einem vorbestimmten Satz einer Vielzahl von Identifikatoren (104) vorhanden ist, wobei jeder Identifikator (104) mindestens eines von sich gegenseitig einschließenden und sich gegenseitig ausschließenden Merkmalen der Mischung von Schallsignalen (108) definiert;
Bestimmen eines oder mehrerer logischer Operatoren, die den einen oder die mehreren extrahierten Identifikatoren (104) verbinden;
Transformieren des einen oder der mehreren extrahierten Identifikatoren (104) und des einen oder der mehreren logischen Operatoren in eine digitale Darstellung (224), die für die Abfrage der Mischung von Schallsignalen (108) vorbestimmt ist;
Ausführen eines neuronalen Netzwerks (210), das trainiert ist, um das Zielschallsignal (218), das durch die digitale Darstellung (224) identifiziert wird, aus der Mischung von Schallsignalen (108) zu extrahieren, indem die digitale Darstellung (224) mit Zwischenausgaben von Zwischenschichten des neuronalen Netzwerks (210), das die Mischung von Schallsignalen (108) verarbeitet, kombiniert wird, wobei das neuronale Netzwerk (210) mit maschinellem Lernen trainiert wird, um das Zielschallsignal (218) zu extrahieren, das in dem vorbestimmten Satz digitaler Darstellungen (224) identifiziert wird; und
Ausgeben des extrahierten Zielschallsignals (218);
**dadurch gekennzeichnet, dass**
die digitale Darstellung (224) einer Bedingungseingabe entspricht, wobei die Bedingungseingabe eine oder mehrere der sich gegenseitig einschließenden Merkmale des Zielschallsignals (218) umfasst; und
der vorbestimmte Satz von Identifikatoren (104) mit der Vielzahl von Schallquellen (102) verbunden ist, wobei die Vielzahl von Identifikatoren (104) in dem vorbestimmten Satz von Identifikatoren (104) mehr als eines umfasst von: einem Identifikator für die lauteste Schallquelle (104), einem Identifikator für die leiseste Schallquelle (104), einem Identifikator für die am weitesten entfernte Schallquelle (104), einem Identifikator für die nächstgelegene Schallquelle (104), einem Identifikator für eine weibliche Sprecherin (104), einem Identifikator für einen männlichen Sprecher (104) und einem Identifikator für eine sprachenspezifische Schallquelle (104).

10. Computerimplementiertes Verfahren nach Anspruch 9, wobei die Mischung von Schallsignalen (108) von einer Vielzahl von Schallquellen (102) mit Unterstützung eines oder mehrerer Mikrofone (106) gesammelt werden, wobei die Vielzahl von Schallquellen (102) mindestens einem entspricht von einem Sprecher, einer Person oder einem Individuum, einer Industrieanlage und Fahrzeugen.

**11.** Computerimplementiertes Verfahren nach Anspruch 9, wobei der eine oder die mehreren Identifikatoren (104) unter Verwendung des einen oder der mehreren logischen Operatoren kombiniert werden, um das Zielschallsignal (218) mit gegenseitig einschließenden und ausschließenden Merkmalen zu extrahieren, wobei das neuronale Netzwerk (210) vorzugsweise unter Verwendung des Satzes vorbestimmter digitaler Darstellungen (224) einer Vielzahl von Kombinationen von Identifikatoren (104) in dem vorbestimmten Satz von einem oder mehreren Identifikatoren (104) trainiert wird.

**12.** Computerimplementiertes Verfahren nach Anspruch 9, ferner umfassend: Erzeugen einer oder mehrerer Abfragen, die mit den sich gegenseitig einschließenden und ausschließenden Merkmalen des Zielschallsignals (218) während des Trainings des neuronalen Netzwerks (210) verbunden sind.

**13.** Computerimplementiertes Verfahren nach Anspruch 9, wobei die Zwischenschichten des neuronalen Netzwerks (210) einen oder mehrere miteinander verflochtene Blöcke umfassen, wobei jeder des einen oder der mehreren miteinander verflochtenen Blöcke mindestens eines umfasst von: einem Merkmalscodierer (404), einem Bedingungsnetzwerk (402), einem Trennnetzwerk (406) und einem Merkmalsdecodierer (408), wobei das Bedingungsnetzwerk (402) eine merkmalsinvariante lineare Modulationsschicht (FiLM, engl. feature-invariant linear modulation) umfasst, die als Eingabe die Mischung von Schallsignalen (108) nimmt und die Eingabe in die Bedingungseingabe moduliert, wobei die FiLM-Schicht (602) die Bedingungseingabe verarbeitet und die verarbeitete Bedingungseingabe an das Trennnetzwerk (406) sendet.

## Revendications

**1.** Système de traitement du son (112) pour extraire un signal sonore cible (218), le signal sonore cible (218) provenant d'une source sonore d'intérêt, le système de traitement du son (112) comprenant :

au moins un processeur (204) ; et
une mémoire (202) ayant des instructions stockées dans celle-ci qui, lorsqu'elles sont exécutées par l'au moins un processeur (204), amènent le système de traitement du son (112) à :

recueillir un mélange de signaux sonores (108) provenant d'une pluralité de sources sonores, ainsi que le signal sonore cible (218) ;
recueillir une requête identifiant le signal sonore cible (218) à extraire du mélange de signaux sonores (108), la requête comprenant un ou plusieurs identificateurs (104) ;
extraire de la requête chaque identificateur (104) des un ou plusieurs identificateurs (104), ledit chaque identificateur (104) étant présent dans un ensemble prédéterminé d'une pluralité d'identificateurs (104), chaque identificateur (104) définissant au moins l'une de caractéristiques mutuellement inclusives ou mutuellement exclusives du mélange de signaux sonores (108) ;
déterminer un ou plusieurs opérateurs logiques reliant les un ou plusieurs identificateurs (104) extraits ;
transformer les un ou plusieurs identificateurs (104) extraits et les un ou plusieurs opérateurs logiques en une représentation numérique (224) prédéterminée pour l'interrogation du mélange de signaux sonores (108) ;
exécuter un réseau neuronal (210) entraîné à extraire le signal sonore cible (218), identifié par la représentation numérique (224), du mélange de signaux sonores (108), en combinant la représentation numérique (224) avec les sorties intermédiaires des couches intermédiaires du réseau neuronal (210) traitant le mélange de signaux sonores (108), dans lequel le réseau neuronal (210) est entraîné par apprentissage automatique à extraire différents signaux sonores identifiés dans un ensemble prédéterminé de représentations numériques (224) ; et
émettre le signal sonore cible extrait (218) ;
**caractérisé en ce que**
la représentation numérique (224) correspond à une entrée de conditionnement, dans lequel l'entrée de conditionnement comprend une ou plusieurs des caractéristiques mutuellement inclusives du signal sonore cible (218) ; et
l'ensemble d'identificateurs (104) prédéterminé est associé à la pluralité de sources sonores (102), dans lequel la pluralité d'identificateurs (104) de l'ensemble d'identificateurs (104) prédéterminé définissant des caractéristiques mutuellement inclusives comprend plus d'un parmi : un identificateur (104) de source sonore la plus bruyante, un identificateur (104) de source sonore la plus silencieuse, un identificateur (104) de source sonore la plus éloignée, un identificateur (104) de source sonore la plus proche, un identificateur (104) de locuteur féminin, un identificateur (104) de locuteur masculin et un identificateur (104) de source sonore spécifique d'une langue.

2. Système de traitement du son (112) selon la revendication 1, dans lequel les signaux sonores du mélange de signaux sonores (108) sont recueillis à partir d'une pluralité de sources sonores (102) à l'aide d'un ou plusieurs microphones (106), dans lequel chaque source sonore de la pluralité de sources sonores (102) correspondant à au moins un élément parmi un locuteur, une personne ou un individu, un équipement industriel, un véhicule ou un son naturel.

3. Système de traitement du son (112) selon la revendication 1, dans lequel les un ou plusieurs identificateurs (104) sont combinés à l'aide des un ou plusieurs opérateurs logiques pour extraire le signal sonore cible (218) ayant des caractéristiques mutuellement inclusives et exclusives, dans lequel les un ou plusieurs opérateurs logiques comprennent au moins l'un parmi : un opérateur NON, un opérateur ET, et un opérateur OU, dans lequel l'opérateur NON est utilisé avec un quelconque identificateur (104) unique parmi les un ou plusieurs identificateurs (104).

4. Système de traitement du son (112) selon la revendication 1, dans lequel le réseau neuronal (210) est entraîné à l'aide de l'ensemble prédéterminé de représentations numériques (224) d'une pluralité de combinaisons d'identificateurs (104) dans l'ensemble prédéterminé d'un ou plusieurs identificateurs (104).

5. Système de traitement du son (112) selon la revendication 1, dans lequel le réseau neuronal (210) est entraîné à l'aide d'un sélecteur d'exemples positifs (704) et d'un sélecteur d'exemples négatifs (702) pour extraire le signal sonore cible (218).

6. Système de traitement du son (112) selon la revendication 1, dans lequel la représentation numérique (224) est représentée par au moins l'un des éléments suivants : un vecteur conditionnel one-hot (306), un vecteur conditionnel multi-hot (308) et une description textuelle.

7. Système de traitement du son (112) selon la revendication 1, dans lequel les couches intermédiaires du réseau neuronal (210) comprennent un ou plusieurs blocs entrelacés, dans lequel chacun des un ou plusieurs blocs entrelacés comprend au moins l'un des éléments suivants : un codeur de caractéristiques (404), un réseau de conditionnement (402), un réseau de séparation (406) et un décodeur de caractéristiques (408), dans lequel le réseau de conditionnement (402) comprend une couche de modulation linéaire à caractéristiques invariantes (FiLM) (602) qui prend en entrée le mélange de signaux sonores (108) et la représentation numérique (224) et module l'entrée pour former l'entrée de conditionnement, dans lequel la couche FiLM (602) traite l'entrée de conditionnement et envoie l'entrée de conditionnement traitée au réseau de séparation (406).

8. Système de traitement du son (112) selon la revendication 7, dans lequel

(i) le réseau de séparation (406) comprend une couche de bloc de convolution (604) qui utilise l'entrée de conditionnement pour séparer le signal sonore cible (218) du mélange de signaux sonores (108), dans lequel le réseau de séparation (406) est configuré pour produire une représentation latente du signal sonore cible (218) ; et/ou
(ii) le décodeur de caractéristiques (408) convertit une représentation latente du signal sonore cible (218) produite par le réseau de séparation (406) en une forme d'onde audio.

9. Procédé mis en œuvre par ordinateur pour extraire un signal sonore cible (218), le signal sonore cible (218) provenant d'une source sonore d'intérêt, le procédé comprenant :

le recueil d'un mélange de signaux sonores (108) provenant d'une pluralité de sources sonores (102), ainsi que du signal sonore cible (218) ;
la sélection d'une requête identifiant le signal sonore cible (218) à extraire du mélange de signaux sonores (108), la requête comprenant un ou plusieurs identificateurs (104) ;
l'extraction de la requête de chaque identificateur (104) des un ou plusieurs identificateurs (104), ledit chaque identificateur (104) étant présent dans un ensemble prédéterminé d'une pluralité d'identificateurs (104), chaque identificateur (104) définissant au moins l'une de caractéristiques mutuellement inclusives ou mutuellement exclusives du mélange de signaux sonores (108) ;
la détermination d'un ou plusieurs opérateurs logiques reliant les un ou plusieurs identificateurs (104) extraits ;
la transformation des un ou plusieurs identificateurs (104) extraits et des un ou plusieurs opérateurs logiques en une représentation numérique (224) prédéterminée pour l'interrogation du mélange de signaux sonores (108) ;
l'exécution d'un réseau neuronal (210) entraîné à extraire le signal sonore cible (218) identifié par la représentation numérique (224) du mélange de signaux sonores (108) en combinant la représentation numérique (224) avec les sorties intermédiaires des couches intermédiaires du réseau neuronal (210) traitant le mélange de signaux sonores (108), dans lequel le réseau neuronal (210) est entraîné par apprentissage automatique à extraire le signal sonore cible (218) identifié dans l'ensemble prédéterminé de représentations numériques (224) ; et l'émission du signal sonore cible (218) extrait ; **caractérisé en ce que** la représentation numérique (224) correspond à une entrée de conditionnement, dans lequel l'entrée de conditionnement comprend une ou plusieurs des caractéristiques mutuellement inclusives du signal sonore cible (218) ; et l'ensemble d'identificateurs (104) prédéterminé est associé à la pluralité de sources sonores (102), dans lequel la pluralité d'identificateurs (104) de l'ensemble d'identificateurs (104) prédéterminé comprend plus d'un parmi : un identificateur (104) de source sonore la plus bruyante, un identificateur (104) de source sonore la plus silencieuse, un identificateur (104) de source sonore la plus éloignée, un identificateur (104) de source sonore la plus proche, un identificateur (104) de locuteur féminin, un identificateur (104) de locuteur masculin et un identificateur (104) de source sonore spécifique d'une langue.

10. Procédé mis en œuvre par ordinateur selon la revendication 9, dans lequel le mélange de signaux sonores (108) est recueilli à partir d'une pluralité de sources sonores (102) à l'aide d'un ou plusieurs microphones (106), dans lequel la pluralité de sources sonores (102) correspond à au moins un élément parmi des locuteurs, une personne ou un individu, un équipement industriel, et des véhicules.

11. Procédé mis en œuvre par ordinateur selon la revendication 9, dans lequel les un ou plusieurs identificateurs (104) sont combinés à l'aide des un ou plusieurs opérateurs logiques pour extraire le signal sonore cible (218) ayant des caractéristiques mutuellement inclusives et exclusives, dans lequel le réseau neuronal (210) est de préférence entraîné à l'aide de l'ensemble de représentations numériques prédéterminées (224) d'une pluralité de combinaisons d'identificateurs (104) dans l'ensemble prédéterminé d'un ou plusieurs identificateurs (104).

12. Procédé mis en œuvre par ordinateur selon la revendication 9, comprenant en outre : la génération d'une ou plusieurs requêtes associées aux caractéristiques mutuellement inclusives et exclusives du signal sonore cible (218) au cours de l'entraînement du réseau neuronal (210).

13. Procédé mis en œuvre par ordinateur selon la revendication 9, dans lequel les couches intermédiaires du réseau neuronal (210) comprennent un ou plusieurs blocs entrelacés, dans lequel chacun des un ou plusieurs blocs entrelacés comprend au moins l'un des éléments suivants : un codeur de caractéristiques (404), un réseau de conditionnement (402), un réseau de séparation (406) et un décodeur de caractéristiques (408), dans lequel le réseau de conditionnement (402) comprend une couche de modulation linéaire à caractéristiques invariantes (FiLM) qui prend en entrée le mélange de signaux sonores (108) et module l'entrée pour former l'entrée de conditionnement, dans lequel la couche FiLM (602) traite l'entrée de conditionnement et envoie l'entrée de conditionnement traitée au réseau de séparation (406).

FIG.1

PLURALITY OF SOUND SOURCES 102

ONE OR MORE IDENTIFIERS 104

Je parle français!

I am the farthest speaker!

106

MIXTURE OF SOUND SIGNALS 108

NETWORK 110

SOUND PROCESSING SYSTEM 112

# FIG.2A

200A

**SOUND PROCESSING SYSTEM 112**

**MEMORY 202**

| NEURAL NETWORK 210 | EXTRACTION MODEL 214 |

DATABASE 206

TRANSFORMATION MODULE 212

MIXTURE OF SOUND SIGNALS 108

QUERY INTERFACE 208

PROCESSOR 204

OUTPUT INTERFACE 216

TARGET SOUND SIGNAL 218

EP 4 505 453 B1

# FIG.2B

**200B**

SOUND PROCESSING SYSTEM 112

MIXTURE OF SOUND SIGNALS 108

ONE OF MORE IDENTIFIERS 104

DATABASE 206

EXTRACTION MODEL 214

QUERY INTERFACE 208

EXTRACTED ONE OR MORE IDENTIFIERS 220

CONDITIONING INPUT 222

NEURAL NETWORK 210

DIGITAL REPRESENTATION 224

TRANSFORMATION MODULE 212

TARGET SOUND SIGNAL 218

EP 4 505 453 B1

**FIG.2C**

200C

226

QUERY INTERFACE 208

Select identifier(s) 208A

⬤ Add identifier 208d

NOT 208c1

☐ French speaker 208aa

☐ English speaker 208bb

◼ Male speaker 208cc

☐ Female speaker 208dd

☐ Loudest speaker 208ee

☐ Quietest speaker 208ff

Select Logical Operator(s) 208B

Select identifier(s) 208A

⬤ AND 208b1

◯ OR 208b2

NOT 208c1

☐ French speaker 208aa

☐ English speaker 208bb

☐ Male speaker 208cc

☐ Female speaker 208dd

◼ Loudest speaker 208ee

☐ Quietest speaker 208ff

◯ Add identifier 208d

FIG.2D

200D

226

QUERY INTERFACE 208

Type a query using identifiers and logical operators as logical expression

228

(French speaker AND (NOT Loudest speaker)) OR (Male speaker)

230

EP 4 505 453 B1

# FIG.3A

300A

**DATABASE 206**

**SET OF PREDETERMINED DIGITAL REPRESENTATIONS 302**

**A PLURALITY OF COMBINATIONS OF ONE OR MORE IDENTIFIERS 304**

**CONDITIONING INPUT 222**

**TRANSFORMATION MODULE 206**

**DIGITAL REPRESENTATION 224**

EP 4 505 453 B1

# FIG.3B

300B

A PLURALITY OF COMBINATIONS OF ONE OR MORE IDENTIFIERS 304

FRECNH MALE SPEAKER 304a

FARTHEST ENGLISH SPEAKER 304b

LOUDEST SPANISH SPEAKER 304c

NEAREST FEMALE SPEAKER 304d

N COMBINATIONS 304n

EP 4 505 453 B1

# FIG.3C

300C

DIGITAL REPRESENTATION 224

ONE HOT CONDITIONAL VECTOR 306

| 0 | 1 | ....... | 0 | 0 |

OR

MULTI HOT CONDITIONAL VECTOR 308

| 1 | 0 | ....... | 0 | 1 |

OR

TEXT DESCRIPTION 310

"Extract the rough rumble"

EP 4 505 453 B1

FIG.4

400

NEURAL NETWORK 210

DIGITAL
REPRESENTATION
224

CONDITIONING
NETWORK 402

MIXTURE
OF SOUND
SIGNALS
108

FEATURE
ENCODER
404

SEPARATION
NETWORK 406

FEATURE
DECODER
408

TARGET
AUDIO
SIGNAL 410

# FIG.5A

500A

A PLURALITY OF COMBINATIONS OF THE MUTUALLY INCLUSIVE CHARACTERISTICS 304

Training Data 502

Spatial Language

Spatial Language

502a

502b

TRAINING OF NEURAL NETWORK 210

504

Test Mixtures

Available conditions to use

Spatial

Language

506

EXECUTION OF NEURAL NETWORK

508

EP 4 505 453 B1

30

# FIG.5B

A PLURALITY OF COMBINATIONS OF THE MUTUALLY INCLUSIVE CHARACTERISTICS 304

500B

Training Data 502

Energy Gender    Energy Gender

502a    502c    502b

TRAINING OF NEURAL NETWORK 210

504

Test Mixtures

Available conditions to use

Gender

Energy

506

EXECUTION OF NEURAL NETWORK

508

FIG.6

FIG.7 **700**

DIGITAL
REPRESENTATION 224

EXTRACTION
MODEL 214

NEGATIVE
EXAMPLE
SELECTOR 702

AUDIO MIXER
706b

DATABASE
206

POSITIVE
EXAMPLE
SELECTOR 704

AUDIO
MIXTURE
SIGNAL
708

NEURAL NETWORK 210

HETEROGENEOUS
SEPARATION
MODEL 712

AUDIO MIXER
706a

GROUND TRUTH
TARGET AUDIO
SIGNAL 710

LOSS
FUNCTION 714

SEPARATED
TARGET
SOUND
SIGNAL 716

EP 4 505 453 B1

33

**FIG.8**

800

START — 802

COLLECTING A MIXTURE OF SOUND SIGNALS FROM A PLURALITY OF SOUND SOURCES — 804

COLLECTING A QUERY IDENTIFYING A TARGET SOUND SIGNAL TO BE EXTRACTED FROM THE MIXTURE OF SOUND SIGNALS — 806

EXTRCATING FROM THE QUERY EACH IDENTIFIER PRESENT IN A PREDETERMINED SET OF ONE OR MORE IDENTIFIERS DEFINING MUTUALLY INCLUSIVE AND EXCLUSIVE CHARACTERISTICS OF THE MIXTURE OF SOUND SIGNALS — 808

DETERMINING ONE OR MORE LOGICAL OPERATORS CONNECTING THE EXTRACTED ONE OR MORE IDENTIFIERS — 810

TRANSFORMING THE EXTRCATED ONE OR MORE IDENTIFIERS AND THE ONE OR MORE LOGICAL OPERATORS INTO DIGITAL REPRESENTATION — 812

EXECUTING A NEURAL NETWORK TRAINED TO EXTRACT THE TARGET SOUND SIGNAL FROM THE MIXTURE OF SOUND SIGNALS — 814

OUTPUTTING THE EXTRACTED TARGET SOUND SIGNAL — 816

END — 818

FIG.9

EP 4 505 453 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Separate What You Describe: Language-Queried Audio Source Separation. **XUBO LIU et al.** arxiv.org. Cornell University Library, 28 March 2022

- **OCHIAI TSUBASA et al.** Listen to What You Want: Neural Network-Based Universal Sound Selector. *Proc. Interspeech*, 2020, 1441-1445